# EUROPEAN PATENT SPECIFICATION

(11) **EP 4 596 492 B1**
(45) Date of publication and mention of the grant of the patent: **04.11.2026**
(21) Application number: 23897183.2
(22) Date of filing: 04.09.2023
(51) Int. Cl.: C01B 13/11, H05H 1/24

(54) **DISCHARGE CELL FOR OZONE GENERATION AND OZONE GAS GENERATION APPARATUS**
ENTLADUNGSZELLE ZUR OZONERZEUGUNG UND OZONGASERZEUGUNGSVORRICHTUNG
CELLULE DE DÉCHARGE POUR GÉNÉRATION D'OZONE ET APPAREIL DE GÉNÉRATION DE GAZ D'OZONE

(30) Priority: 29.11.2022 JP 2022190667
(43) Date of publication of application: 06.08.2025
(73) Proprietor: Sumitomo Precision Products Co., Ltd., Hyogo 660-0891 (JP)
(72) Inventor: YOSHIMURA Masaya, Amagasaki-shi, Hyogo 660-0891 (JP); MORI Kosuke, Amagasaki-shi, Hyogo 660-0891 (JP)
(74) Representative: Germain Maureau
(86) International application number: PCT/JP2023/032265
(87) International publication number: WO 2024/116523

(56) References cited:
- JP-A- 2012 167 009
- JP-A- S6 291 405
- JP-U- S56 119 438

## Description

### TECHNICAL FIELD

The present disclosure relates to a discharge cell for ozone generation.

### BACKGROUND ART

Patent Document 1 discloses a discharge cell for ozone generation. The discharge cell includes a discharge unit that contains a high-voltage electrode module and a low-voltage electrode module, and a cooling passage that cools the discharge unit. The discharge unit includes a discharge space between the high-voltage electrode module and the low-voltage electrode module. When high voltage is applied to the high-voltage electrode of the high-voltage electrode module, barrier discharge is generated in the discharge space, and thus ozone gas is generated. When heat is generated by the electric discharge, the temperature rises in the discharge space, and the generated ozone is decomposed by heat. To address this problem, a heating medium in the cooling passage is used to cool the discharge unit, whereby the ozone is less decomposed by heat.

### CITATION LIST

### PATENT DOCUMENT

Patent Document 1: Japanese Unexamined Patent Publication No. 2012-167009

### SUMMARY OF THE INVENTION

### TECHNICAL PROBLEM

The discharge cell of Patent Document 1 might allow current on the high-voltage electrode side to flow into the cooling passage when voltage is applied to the high-voltage electrode of the discharge unit. As a result, the discharge cell consumes more power due to the current flowing into the cooling passage.

An object of the present disclosure is to reduce an increase in power consumption that is due to current leaking from the high-voltage electrode side to the cooling passage.

### SOLUTION TO THE PROBLEM

The present disclosure is directed to a discharge cell for an ozone generation apparatus.

The heating medium passage (P) includes: an inflow passage (33) into which the heating medium flows; a high-voltage side passage (HP) and a low-voltage side passage (LP) each branching from an outflow end of the inflow passage (33); and an outflow passage (34) with which each outflow end of the high-voltage side passage (HP) and the low-voltage side passage (LP) is connected. The high-voltage side passage (HP) includes a plurality of high-voltage side cooling passages (HP2) connected in parallel to each other so as to be each adjacent to the high-voltage electrode module (62) of the plurality of discharge units (60). The low-voltage side passage (LP) includes a plurality of low-voltage side cooling passages (LP2) connected in parallel to each other so as to be each adjacent to the low-voltage electrode module (61) of the plurality of discharge units (60). Note that the "plurality of high-voltage side cooling passages (HP2) connected in parallel" described herein means that the high-voltage side cooling passages (HP2) are connected as passages in parallel to each other, and does not mean that the high-voltage side cooling passages (HP2) are structurally arranged side by side. Similarly, the "plurality of low-voltage side cooling passages (LP2) connected in parallel" described herein means that the low-voltage side cooling passages (LP2) are connected as passages in parallel to each other, and does not mean that the low-voltage side cooling passages (LP2) are structurally arranged side by side.

The heating medium passage (P) includes a first ground portion (8A) provided between one of the high-voltage side cooling passages (HP2) that is closest to the outflow end of the inflow passage (33) and one of the low-voltage side cooling passages (LP2) that is closest to the outflow end of the inflow passage (33). An electric resistance value of a first passage (F1) between the first ground portion (8A) and one of the high-voltage side cooling passages (HP2) that is closest to the first ground portion (8A) is higher than an electric resistance value of a second passage (F2) between the first ground portion (8A) and one of the low-voltage side cooling passages (LP2) that is closest to the first ground portion (8A). As a result, it is possible to reduce current flowing from the high-voltage side cooling passage (HP2) to the first ground portion (8A) due to voltage being applied between the high-voltage electrode (62c) and the low-voltage electrode (61c).

The heating medium passage (P) includes a second ground portion (8B) provided between one of the high-voltage side cooling passages (HP2) that is closest to an inflow end of the outflow passage (34) and one of the low-voltage side cooling passages (LP2) that is closest to the inflow end of the outflow passage (34). An electric resistance value of a third passage (F3) between the second ground portion (8B) and one of the high-voltage side cooling passages (HP2) that is closest to the second ground portion (8B) is higher than an electric resistance value of a fourth passage (F4) between the second ground portion (8B) and one of the low-voltage side cooling passages (LP2) that is closest to the second ground portion (8B). As a result, it is possible to reduce current flowing from the high-voltage side cooling passage (HP2) to the second ground portion (8B) due to voltage being applied to the high-voltage electrode (62c).

The high-voltage electrode modules (62) of the discharge units (60) adjacent to each other preferably face each other with the high-voltage side cooling passage (HP2) sandwiched therebetween, and the low-voltage electrode modules (61) of the discharge units (60) adjacent to each other preferably face each other with the low-voltage side cooling passage (LP2) sandwiched therebetween.

If the high-voltage electrode module (62) of one of the discharge units (60) adjacent to each other and the low-voltage electrode module (61) of the other one of the discharge units (60) adjacent to each other face each other, current can leak from the high-voltage electrode module (62) toward the low-voltage electrode module (61). In contrast, of the discharge units (60) adjacent to each other, the high-voltage electrode modules (62) face each other and the low-voltage electrode modules (61) face each other, and thus it is possible to reduce current leaking between those electrodes.

A passage length of the first passage (F1) is preferably longer than a passage length of the second passage (F2), and a passage length of the third passage (F3) is preferably longer than a passage length of the fourth passage (F4). According to this configuration, the electric resistance value of the first passage (F1) can be higher than the electric resistance value of the second passage (F2), and the electric resistance value of the third passage (F3) can be higher than the electric resistance value of the fourth passage (F4).

The heating medium passage (P) preferably includes a high-voltage side inflow main passage (91) extending from the outflow end of the inflow passage (33) to one of the high-voltage side cooling passages (HP2) that is closest to the outflow end of the inflow passage (33), a low-voltage side inflow main passage (93) extending from the outflow end of the inflow passage (33) to one of the low-voltage side cooling passages (LP2) that is closest to the outflow end of the inflow passage (33), a high-voltage side outflow main passage (92) extending from the inflow end of the outflow passage (34) to one of the high-voltage side cooling passages (HP2) that is closest to the inflow end of the outflow passage (34), and a low-voltage side outflow main passage (94) extending from the inflow end of the outflow passage (34) to one of the low-voltage side cooling passages (LP2) that is closest to the inflow end of the outflow passage (34). The first ground portion (8A) is preferably provided at the outflow end of the inflow passage (33), and the second ground portion (8B) is preferably provided at the inflow end of the outflow passage (34). An electric resistance value of the high-voltage side inflow main passage (91) is preferably higher than an electric resistance value of the low-voltage side inflow main passage (93), and an electric resistance value of the high-voltage side outflow main passage (92) is preferably higher than an electric resistance value of the low-voltage side outflow main passage (94).

According to this configuration, the electric resistance value of the first passage (F1) can be higher than the electric resistance value of the second passage (F2), and the electric resistance value of the third passage (F3) can be higher than the electric resistance value of the fourth passage (F4). As a result, it is possible to reduce current flowing from the high-voltage side cooling passage (HP2) to the first ground portion (8A), and current flowing from the high-voltage side cooling passage (HP2) to the second ground portion (8B), due to voltage being applied to the high-voltage electrode (62c).

A passage length of the high-voltage side inflow main passage (91) is preferably longer than a passage length of the low-voltage side inflow main passage (93), and a passage length of the high-voltage side outflow main passage (92) is preferably longer than a passage length of the low-voltage side outflow main passage (94).

According to this configuration, the electric resistance value of the high-voltage side inflow main passage (91) can be higher than the electric resistance value of the low-voltage side inflow main passage (93), and the electric resistance value of the high-voltage side outflow main passage (92) can be higher than the electric resistance value of the low-voltage side outflow main passage (94).

The electric resistance value of the high-voltage side inflow main passage (91) is preferably equal to the electric resistance value of the high-voltage side outflow main passage (92). The passage length of the high-voltage side inflow main passage (91) is preferably equal to the passage length of the high-voltage side outflow main passage (92).

Accordingly, the passage length of each of the high-voltage side inflow main passage (91) and the high-voltage side outflow main passage (92) can be minimized as appropriate.

Any one of or both of the high-voltage side inflow main passage (91) and the high-voltage side outflow main passage (92) preferably include a bent portion (95, 96) having a bent passage.

Accordingly, it is possible to easily increase the passage length of the high-voltage side inflow main passage (91) and the high-voltage side outflow main passage (92).

The ozone generation apparatus preferably includes: the discharge cell (20) described above; and a supply unit (4) configured to supply the inflow passage (33) with water of which a specific resistance value is 15 [Ω·m] or higher.

In the discharge cell (20) of the present invention, the specific resistance value of the water flowing through the heating medium passage (P) is 15 [Ω·m] or higher, whereby, in particular, it is possible to reduce current flowing from the high-voltage electrode module (62) to the low-voltage side passage (LP), and thus it is possible to reduce the power loss.

### BRIEF DESCRIPTION OF THE DRAWINGS

[FIG. 1] FIG. 1 is a schematic perspective view of an exterior of an ozone generation apparatus.
[FIG. 2] FIG. 2 is a configuration diagram schematically showing a discharge cell and passages connected with the discharge cell.
[FIG. 3] FIG. 3 is a perspective view of the overall configuration of the discharge cell.
[FIG. 4] FIG. 4 is a perspective view of the discharge cell disassembled into individual units.
[FIG. 5] FIG. 5 is a perspective view of a header unit disassembled into individual substrates.
[FIG. 6] FIG. 6 is a perspective view of a low-voltage side cooling unit disassembled into individual substrates.
[FIG. 7] FIG. 7 is a perspective view of a discharge unit disassembled into individual substrates.
[FIG. 8] FIG. 8 is a cross-sectional view of a main part of the discharge unit taken in the front-back direction.
[FIG. 9] FIG. 9 is a perspective view of a high-voltage side cooling unit disassembled into individual substrates.
[FIG. 10] FIG. 10 is a schematic view of an upstream side of the heating medium passage in the discharge cell.
[FIG. 11] FIG. 11 is a schematic view of a downstream side of the heating medium passage in the discharge cell.
[FIG. 12] FIG. 12 is a schematic diagram of a heating medium passage in a discharge cell of a comparative example.
[FIG. 13] FIG. 13 is a graph showing the relationship between the specific resistance value of the heating medium and the power loss in the heating medium passage in the embodiment and the comparative example.

### DESCRIPTION OF EMBODIMENTS

Embodiments of the present disclosure will be described in detail below with reference to the drawings. The present disclosure is not limited to the embodiments described below, and various modifications can be made without departing from the technical idea of the present disclosure. The drawings are provided to conceptually explain the present disclosure, and therefore, for ease of understanding, the dimensions, ratios, or numbers may be exaggerated or simplified as necessary.

### (1) Overall Configuration of Ozone Generation Apparatus

A discharge cell (20) of the present disclosure is applied to an ozone generation apparatus (1). The ozone generation apparatus (1) is applied to semiconductor manufacturing facilities, for example. The ozone generation apparatus (1) generates ozone gas. The ozone generation apparatus (1) generates ozone gas using high-purity oxygen gas as a raw material supplied from outside. In the semiconductor manufacturing facilities, ozone gas generated by the ozone generation apparatus (1) is dissolved in water to generate ozone water. The ozone water is used to clean silicon wafers, for example. Alternatively, the generated ozone gas is used to form a film on a substrate.

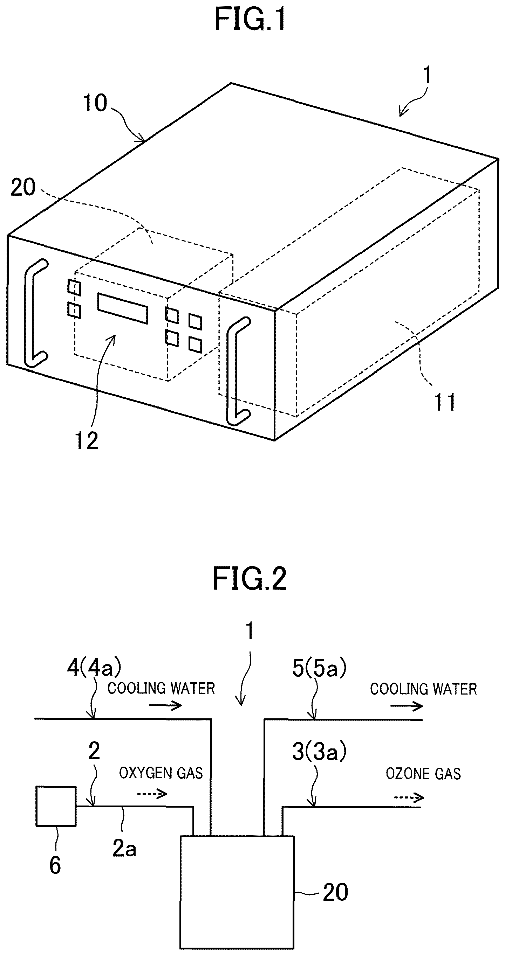

As illustrated in FIG. 1, the ozone generation apparatus (1) includes a casing (10), a discharge cell (20), and a power supply unit (11). The casing (10) is formed in a hollow box shape. The casing (10) houses the discharge cell (20) and the power supply unit (11). The power supply unit (11) includes a high-voltage power supply. The power supply unit (11) supplies electric power to the discharge cell (20). The discharge cell (20) generates ozone gas when high voltage is applied from the power supply unit (11). The front surface of the casing (10) is provided with an operation unit (12). The operation unit (12) includes a switch, a display, a lamp, and the like.

As schematically illustrated in FIG. 2, the ozone generation apparatus (1) includes an oxygen gas supply unit (2), an ozone gas supply unit (3), a heating medium supply unit (4), and a heating medium discharge unit (5).

The oxygen gas supply unit (2) supplies high-purity oxygen gas to the discharge cell (20). The oxygen gas supply unit (2) includes an oxygen gas source (6) that stores oxygen gas, and an oxygen gas supply channel (2a) that connects the oxygen gas source (6) and the discharge cell (20).

The ozone gas supply unit (3) sends ozone gas generated in the discharge cell (20) to a predetermined target. The ozone gas supply unit (3) includes an ozone gas supply channel (3a) through which ozone gas is sent from the discharge cell (20) to the target.

The heating medium supply unit (4) supplies the discharge cell (20) with a heating medium that cools the discharge cell (20). The heating medium supply unit (4) includes a heating medium supply channel (4a) through which cooling water as a heating medium is sent to the discharge cell (20).

The heating medium discharge unit (5) discharges cooling water that has been used to cool the discharge cells (20). The heating medium discharge unit (5) includes a heating medium discharge channel (5a) through which the cooling water that has flowed out of the discharge cell (20) is sent to a predetermined passage.

The heating medium that has flowed out of the heating medium discharge channel (5a) may be sent to the heating medium supply channel (4a) so that the heating medium is circulated. In this configuration, the heating medium supply unit (4) includes a transport unit such as a pump that transports the heating medium, and a cooling device that cools the heating medium. The heating medium supply unit (4) includes a tank that stores heating media, a valve that opens and closes the heating medium supply channel (4a), and a faucet of a water pipe that is connected with the heating medium supply channel (4a). The heating medium supply channel (4a) may be provided with a filter that captures impurities in heating media and the various devices described above.

### (2) Discharge Cell

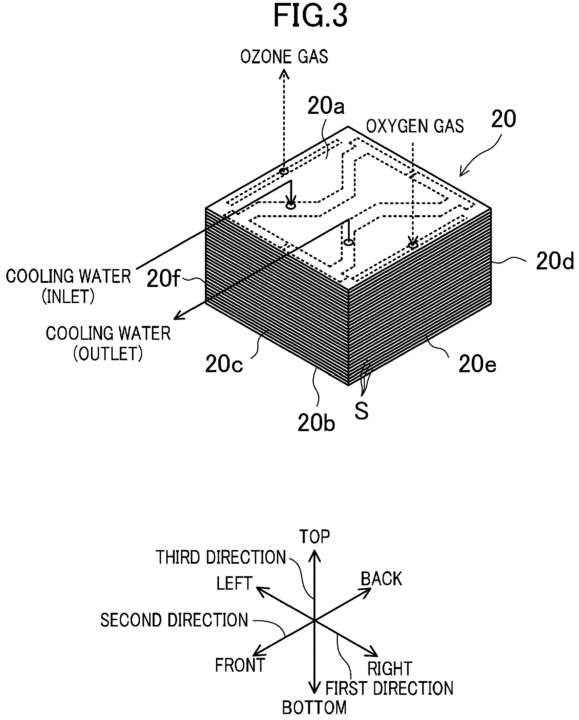

The configuration of the discharge cell (20) will be described with reference to FIG. 3 to 13. In the following description, the directions "top," "bottom," "right," "left," "front," and "back" refer to the directions illustrated in FIG. 3, unless otherwise noted. As illustrated in FIG. 3, the "first direction" described below corresponds to the right-left direction, the "second direction" corresponds to the front-back direction, and the third direction corresponds to the top-bottom direction. In the following description, the directions "right" and "left" mean the directions defined when the discharge cell (20) is viewed from the front side.

As illustrated in FIG. 3, the exterior of the discharge cell (20) is formed in a rectangular parallelepiped shape or a prism shape. The discharge cell (20) includes a plurality of substrates (S) stacked in the top-bottom direction. Strictly speaking, the plurality of substrates (S) are stacked through glass-based bonding layers. The plurality of substrates (S) include multiple types of substrates with different structures and functions. These substrates (S) are flat plates that are rectangular in plan view (top view). The plurality of substrates are made of alumina material, for example.

The discharge cell (20) has six surfaces. The six surfaces include an upper surface (20a) formed on the upper side of the discharge cell (20), a lower surface (20b) formed on the lower side of the discharge cell (20), and four side surfaces. The four side surfaces include a front surface (20c) formed on the front side of the discharge cell (20), a back surface (20d) formed on the back side of the discharge cell (20), a right surface (20e) formed on the right side of the discharge cell (20), and a left surface (20f) formed on the left side of the discharge cell (20).

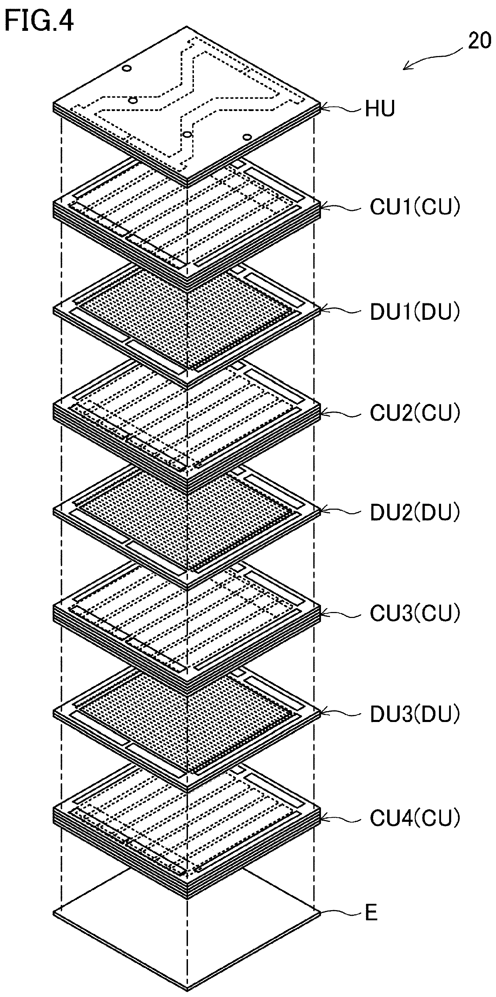

As illustrated in FIG. 4, the discharge cell (20) of the embodiment includes, in the order from top to bottom, a header unit (HU), a first cooling unit (CU1), a first discharge unit (DU1), a second cooling unit (CU2), a second discharge unit (DU2), a third cooling unit (CU3), a third discharge unit (DU3), a fourth cooling unit (CU4), and an end plate (E). The first discharge unit (DU1), the second discharge unit (DU2), and the third discharge unit (DU3) have basically the same configuration. For the sake of convenience, the first discharge unit (DU1), the second discharge unit (DU2), and the third discharge unit (DU3) may be referred to as "the discharge unit(s) (DU)". Note that the positional relation of the low-voltage electrode module (61) and the high-voltage electrode module (62) in the first discharge unit (DU1) and the third discharge unit (DU3) is opposite in the top-bottom direction to the positional relation of the same in the second discharge unit (DU2).

The first cooling unit (CU1) and the third cooling unit (CU3) have basically the same configuration. The first cooling unit (CU1) and the third cooling unit (CU3) form a low-voltage side cooling unit (50) that is located near the low-voltage electrode module (61) of the discharge cell (20). The second cooling unit (CU2) and the fourth cooling unit (CU4) have basically the same configuration. The second cooling unit (CU2) and the fourth cooling unit (CU4) form a high-voltage side cooling unit (70) that is located near the high-voltage electrode module (62) of the discharge cell (20). For the sake of convenience, the first cooling unit (CU1), the second cooling unit (CU2), the third cooling unit (CU3), and the fourth cooling unit (CU4) may be referred to as "the cooling unit(s) (CU)".

In the discharge cell (20), the discharge units (DU) and the cooling units (CU) are alternately stacked in the top-bottom direction.

### (2-1) Header Unit

The header unit (HU) has a function of introducing oxygen gas into the discharge cell (20) and a function of allowing generated ozone gas to flow out of the discharge cell (20). The header unit (HU) has a function of introducing cooling water into the discharge cell (20) and a function of allowing cooling water to flow out of the discharge cell (20). The header unit (HU) has a function of allowing cooling water to flow separately into the low-voltage electrode module (61) and the high-voltage electrode module (62). The header unit (HU) has a function of combining the cooling water that flowed separately into the low-voltage electrode module (61) and the high-voltage electrode module (62).

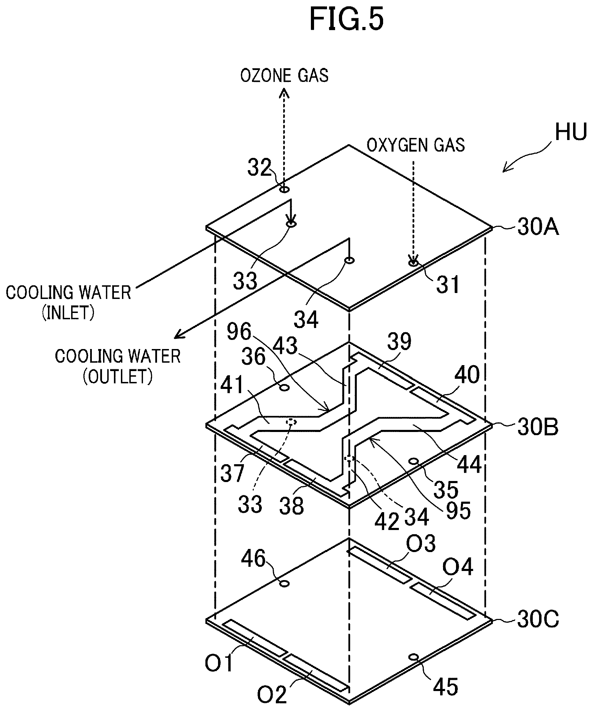

As illustrated in FIG. 5, the header unit (HU) includes, in the order from top to bottom, a first header plate (30A), a second header plate (30B), and a third header plate (30C).

### (2-2-1) First Header Plate

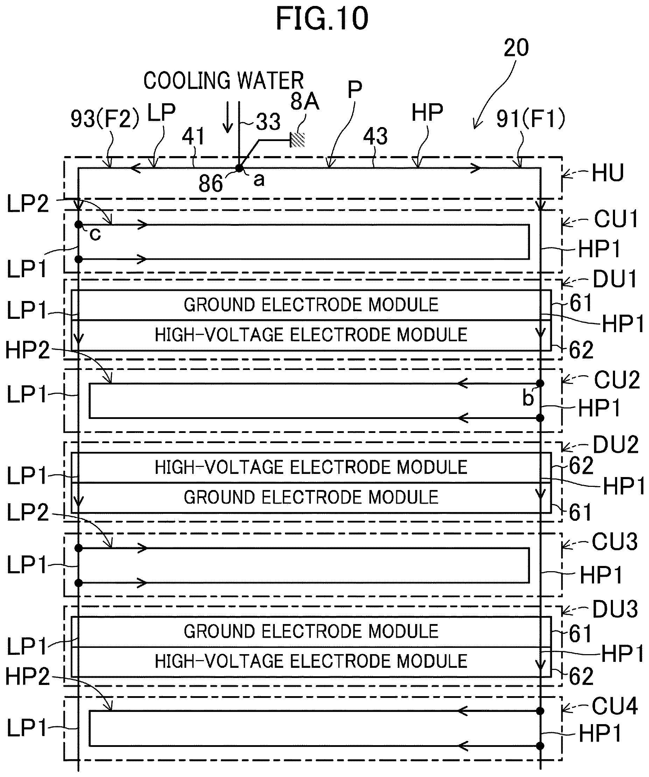

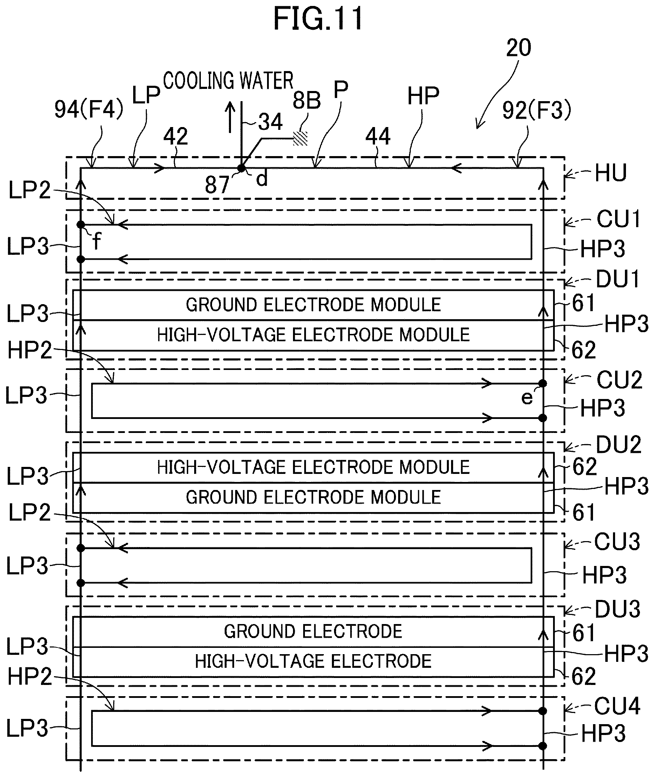

The first header plate (30A) includes a gas inlet (31), a gas outlet (32), a heating medium inflow passage (33), and a heating medium outflow passage (34). These are the circular holes that penetrate the first header plate (30A) in the third direction. These holes may be elongated holes. The gas inlet (31) is connected with the outflow end of the oxygen gas supply channel (2a). The gas outlet (32) is connected with the inflow end of the ozone gas supply channel (3a). The heating medium inflow passage (33) is connected with the outflow end of the heating medium supply channel (4a). The heating medium outflow passage (34) is connected with the inflow end of the heating medium discharge channel (5a). The discharge cell (20) includes a heating medium passage (P) that leads from the heating medium inflow passage (33) to the heating medium outflow passage (34) and through which cooling water as a heating medium flows (see FIG. 10 and 11).

The gas inlet (31) is located along the right surface (20e) of the discharge cell (20). The gas inlet (31) is located in the middle of the right side of the first header plate (30A) in the front-back direction. The gas outlet (32) is located along the left surface (20f) of the discharge cell (20). The gas outlet (32) is located in the middle of the left side of the first header plate (30A) in the front-back direction.

The heating medium inflow passage (33) is located close to the front surface (20c) and the left surface (20f) with respect to the center of the discharge cell (20). The heating medium outflow passage (34) is located close to the front surface (20c) and the right surface (20e) with respect to the center of the discharge cell (20).

### (2-2-2) Second Header Plate

The second header plate (30B) includes a first gas inflow relay passage (35) and a first gas outflow relay passage (36). The first gas inflow relay passage (35) and the first gas outflow relay passage (36) are the circular holes that penetrate the second header plate (30B) in the third direction. These holes may be elongated holes. The first gas inflow relay passage (35) is located to overlap the gas inlet (31) in the third direction. The first gas outflow relay passage (36) is located to overlap the gas outlet (32) in the third direction.

The second header plate (30B) includes a low-voltage side inflow relay passage (37), a low-voltage side outflow relay passage (38), a high-voltage side inflow relay passage (39), and a high-voltage side outflow relay passage (40). These relay passages penetrate the second header plate (30B) in the third direction.

The low-voltage side inflow relay passage (37) is located along the front surface (20c) of the discharge cell (20). The low-voltage side inflow relay passage (37) is located on the left part of the front side of the second header plate (30B). The low-voltage side inflow relay passage (37) is formed in a substantially rectangular shape that extends from the middle of the second header plate (30B) in the right-left direction to the vicinity of the left surface (20f) of the discharge cell (20).

The low-voltage side outflow relay passage (38) is located along the front surface (20c) of the discharge cell (20). The low-voltage side outflow relay passage (38) is located on the right part of the front side of the second header plate (30B). The low-voltage side outflow relay passage (38) is formed in a substantially rectangular shape that extends from the middle of the second header plate (30B) in the right-left direction to the vicinity of the right surface (20e) of the discharge cell (20).

The high-voltage side inflow relay passage (39) is located along the back surface (20d) of the discharge cell (20). The high-voltage side inflow relay passage (39) is located on the left part of the rear side of the second header plate (30B). The high-voltage side inflow relay passage (39) is formed in a substantially rectangular shape that extends from the middle of the second header plate (30B) in the right-left direction to the vicinity of the left surface (20f) of the discharge cell (20).

The high-voltage side outflow relay passage (40) is located along the back surface (20d) of the discharge cell (20). The high-voltage side outflow relay passage (40) is located on the right part of the rear side of the second header plate (30B). The high-voltage side outflow relay passage (40) is formed in a substantially rectangular shape that extends from the middle of the second header plate (30B) in the right-left direction to the vicinity of the right surface (20e) of the discharge cell (20).

The second header plate (30B) includes a low-voltage side inflow branch passage (41), a low-voltage side outflow branch passage (42), a high-voltage side inflow branch passage (43), and a high-voltage side outflow branch passage (44). These branch passages penetrate the second header plate (30B) in the third direction. The upper side of these branch passages are closed by the first header plate (30A), and the lower side of these branch passages are closed by the third header plate (30C).

The inflow end of the low-voltage side inflow branch passage (41) is connected with the heating medium inflow passage (33), and the outflow end of the low-voltage side inflow branch passage (41) is connected with the low-voltage side inflow relay passage (37). The low-voltage side inflow branch passage (41) includes a portion that extends from the heating medium inflow passage (33) toward the corner between the front side and left side of the second header plate (30B), and a portion that further extends therefrom toward the front to connect with the low-voltage side inflow relay passage (37).

The outflow end of the low-voltage side outflow branch passage (42) is connected with the heating medium outflow passage (34), and the inflow end of the low-voltage side outflow branch passage (42) is connected with the low-voltage side outflow relay passage (38). The low-voltage side outflow branch passage (42) includes a portion that extends from the heating medium outflow passage (34) toward the corner between the front side and right side of the second header plate (30B), and a portion that further extends therefrom toward the front to connect with the low-voltage side outflow relay passage (38).

The inflow end of the high-voltage side inflow branch passage (43) is connected with the heating medium inflow passage (33), and the outflow end of the high-voltage side inflow branch passage (43) is connected with the high-voltage side inflow relay passage (39). The high-voltage side inflow branch passage (43) includes a portion that extends from the heating medium inflow passage (33) toward the center of the second header plate (30B); a portion that further extends therefrom toward the back; a portion that further extends therefrom toward the corner between the rear side and left side of the second header plate (30B); and a portion that further extends therefrom toward the back to connect with the high-voltage side inflow relay passage (39).

As described, the high-voltage side inflow branch passage (43) has a bent shape. The passage length of the high-voltage side inflow branch passage (43) is longer than the passage length of the low-voltage side inflow branch passage (41).

The outflow end of the high-voltage side outflow branch passage (44) is connected with the heating medium outflow passage (34), and the inflow end of the high-voltage side outflow branch passage (44) is connected with the high-voltage side outflow relay passage (40). The high-voltage side outflow branch passage (44) includes a portion that extends from the heating medium outflow passage (34) to the center of the second header plate (30B); a portion that further extends therefrom toward the back; a portion that extends therefrom toward the corner between the rear side and right side of the second header plate (30B); and a portion that further extends therefrom toward the back to connect with the high-voltage side outflow relay passage (40).

As described, the high-voltage side outflow branch passage (44) has a bent shape. The passage length of the high-voltage side outflow branch passage (44) is longer than the passage length of the low-voltage side outflow branch passage (42).

### (2-2-3) Third Header Plate

The third header plate (30C) includes a second gas inflow relay passage (45) and a second gas outflow relay passage (46). The second gas inflow relay passage (45) and the second gas outflow relay passage (46) are the circular holes that penetrate the third header plate (30C) in the third direction. These holes may be elongated holes. The second gas inflow relay passage (45) is located to overlap the first gas inflow relay passage (35) in the third direction, and the second gas outflow relay passage (46) is located to overlap the first gas outflow relay passage (36) in the third direction.

The third header plate (30C) includes a low-voltage side inflow opening (O1), a low-voltage side outflow opening (O2), a high-voltage side inflow opening (O3), and a high-voltage side outflow opening (O4). These openings penetrate the third header plate (30C) in the third direction. These openings are also formed in some other substrates (S), which will be described in detail later. These openings formed in the third header plate (30C) will be described in detail below as representative examples.

The low-voltage side inflow opening (O1) is located along the front surface (20c) of the discharge cell (20). The low-voltage side inflow opening (O1) is located on the left part of the front side of the third header plate (30C). The low-voltage side inflow opening (O1) is formed in a substantially rectangular shape that extends from the middle of the third header plate (30C) in the right-left direction to the vicinity of the left surface (20f) of the discharge cell (20). The low-voltage side inflow opening (O1) is located to overlap the low-voltage side inflow relay passage (37) in the third direction.

The low-voltage side outflow opening (O2) is located along the front surface (20c) of the discharge cell (20). The low-voltage side outflow opening (O2) is located on the right part of the front side of the second header plate (30B). The low-voltage side outflow opening (O2) is formed in a substantially rectangular shape that extends from the middle of the second header plate (30B) in the right-left direction to the vicinity of the right surface (20e) of the discharge cell (20). The low-voltage side outflow opening (O2) is located to overlap the low-voltage side outflow relay passage (38) in the third direction.

The high-voltage side inflow opening (O3) is located along the back surface (20d) of the discharge cell (20). The high-voltage side inflow opening (O3) is located on the left part of the rear side of the second header plate (30B). The high-voltage side inflow opening (O3) is formed in a substantially rectangular shape that extends from the middle of the second header plate (30B) in the right-left direction to the vicinity of the left surface (20f) of the discharge cell (20). The high-voltage side inflow opening (O3) is located to overlap the high-voltage side inflow relay passage (39) in the third direction.

The high-voltage side outflow opening (O4) is located along the back surface (20d) of the discharge cell (20). The high-voltage side outflow opening (O4) is located on the right part of the rear side of the second header plate (30B). The high-voltage side outflow opening (O4) is formed in a substantially rectangular shape that extends from the middle of the second header plate (30B) in the right-left direction to the vicinity of the right surface (20e) of the discharge cell (20). The high-voltage side outflow opening (O4) is located to overlap the high-voltage side outflow relay passage (40) in the third direction.

### (2-3) Low-Voltage Side Cooling Unit

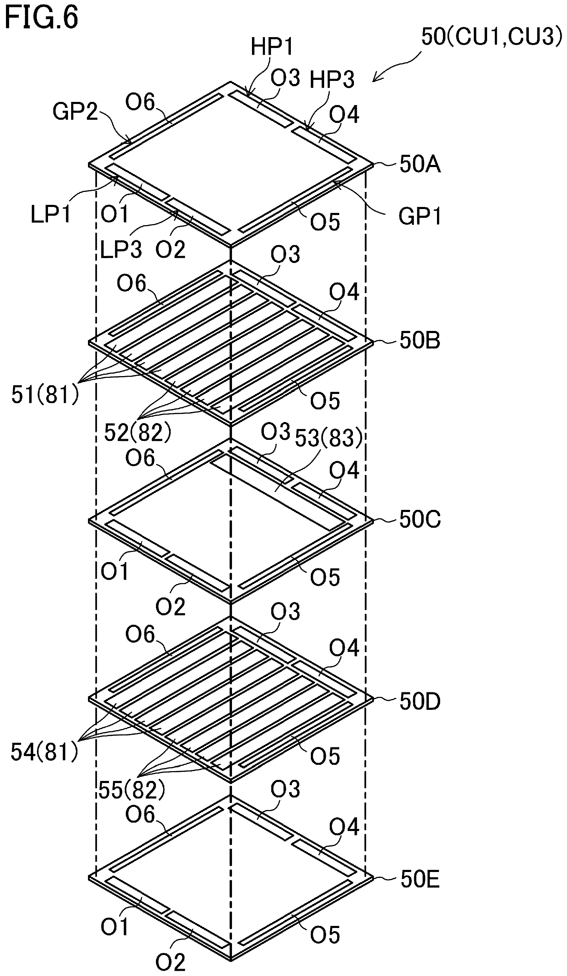

The low-voltage side cooling unit (50) is adjacent to the low-voltage electrode module (61) of the discharge unit (DU). As illustrated in FIG. 6, the low-voltage side cooling unit (50) includes, in the order from top to bottom, a first upper partition plate (50A), a first upper passage plate (50B), a first middle plate (50C), a first lower passage plate (50D), and a first lower partition plate (50E).

### (2-3-1) First Upper Partition Plate

The first upper partition plate (50A) includes a gas inflow opening (O5) and a gas outflow opening (O6). These openings penetrate the first upper partition plate (50A) in the third direction. These openings are also formed in some other substrates, which will be described in detail later. These openings formed in the first upper partition plate (50A) will be described in detail below as representative examples.

The gas inflow opening (O5) is located along the right surface (20e) of the discharge cell (20). The gas inflow opening (O5) extends in the front-back direction along the right side of the first upper partition plate (50A). The gas inflow opening (O5) is located to overlap the second gas inflow relay passage (45) in the third direction.

The gas outflow opening (O6) is located along the left surface (20f) of the discharge cell (20). The gas outflow opening (O6) extends in the front-back direction along the left side of the first upper partition plate (50A). The gas outflow opening (O6) is located to overlap the second gas outflow relay passage (46) in the third direction.

The first upper partition plate (50A) includes a low-voltage side inflow opening (O1), a low-voltage side outflow opening (O2), a high-voltage side inflow opening (O3), and a high-voltage side outflow opening (O4). These openings penetrate the first upper partition plate (50A) in the third direction.

### (2-3-2) First Upper Passage Plate

The first upper passage plate (50B) includes a gas inflow opening (O5), a gas outflow opening (O6), a high-voltage side inflow opening (O3), and a high-voltage side outflow opening (O4). These openings penetrate the first upper passage plate (50B) in the third direction.

The first upper passage plate (50B) includes a first upper upstream passage (51) and a first upper downstream passage (52). These passages penetrate the first upper passage plate (50B) in the third direction. The first upper passage plate (50B) of the embodiment includes four first upper upstream passages (51) and four first upper downstream passages (52).

The first upper upstream passage (51) is formed in a rectangular shape that extends in the front-back direction as the second direction. The first upper upstream passage (51) may have a trapezoidal shape. The first upper upstream passage (51) extends from the vicinity of the front surface (20c) of the discharge cell (20) to the vicinity of the high-voltage side inflow opening (O3). The plurality of first upper upstream passages (51) are arranged in parallel to each other at equal intervals in the right-left direction. The plurality of first upper upstream passages (51) may be arranged at different intervals in the right-left direction. The front end (the inflow end) of each first upper upstream passage (51) is located to overlap the low-voltage side inflow opening (O1) in the third direction.

The first upper downstream passage (52) is formed in a rectangular shape that extends in the front-back direction as the second direction. The first upper downstream passage (52) may have a trapezoidal shape. The first upper downstream passage (52) extends from the vicinity of the front surface (20c) of the discharge cell (20) to the vicinity of the high-voltage side outflow opening (O4). The plurality of first upper downstream passages (52) are arranged in parallel to each other at equal intervals in the right-left direction. The front end (the outflow end) of each first upper downstream passage (52) is located to overlap the low-voltage side outflow opening (O2) in the third direction.

The upper side of the first upper upstream passage (51) from which the inflow end (the front end) is excluded is closed by the first upper partition plate (50A). The lower side of the first upper upstream passage (51) from which the inflow end (the front end) and the outflow end (the rear end) are excluded is closed by the first middle plate (50C). The upper side of the first upper downstream passage (52) from which the outflow end (the front end) is excluded is closed by the first upper partition plate (50A). The lower side of the first upper downstream passage (52) from which the inflow end (the rear end) and the outflow end (the front end) are excluded is closed by the first middle plate (50C).

### (2-3-3) First Middle Plate

The first middle plate (50C) includes a gas inflow opening (O5), a gas outflow opening (O6), a low-voltage side inflow opening (O1), a low-voltage side outflow opening (O2), a high-voltage side inflow opening (O3), and a high-voltage side outflow opening (O4). These openings penetrate the first middle plate (50C) in the third direction.

The first middle plate (50C) includes a first middle passage (53). The first middle passage (53) is located along the back surface (20d) of the discharge cell (20) and extends in the right-left direction as the first direction. Specifically, the first middle passage (53) extends from the vicinity of the gas inflow opening (O5) to the vicinity of the gas outflow opening (O6). The upstream portion of the first middle passage (53) is adjacent to the high-voltage side inflow opening (O3), and the downstream portion of the first middle passage (53) is adjacent to the high-voltage side outflow opening (O4). The upstream portion of the first middle passage (53) is located to overlap the rear end (the outflow end) of each first upper upstream passage (51) in the third direction. The downstream portion of the first middle passage (53) is located to overlap the rear end (the inflow end) of each first upper downstream passage (52) in the third direction.

### (2-3-4) First Lower Passage Plate

The structure of the first lower passage plate (50D) is basically the same as the structure of the first upper passage plate (50B). The first lower passage plate (50D) includes a gas inflow opening (O5), a gas outflow opening (O6), a high-voltage side inflow opening (O3), and a high-voltage side outflow opening (O4). These openings penetrate the first lower passage plate (50D) in the third direction.

The first lower passage plate (50D) includes a first lower upstream passage (54) and a first lower downstream passage (55). These passages penetrate the first lower passage plate (50D) in the third direction. The first lower passage plate (50D) of the embodiment includes four first lower upstream passages (54) and four first lower downstream passages (55).

The first lower upstream passage (54) extends in the front-back direction as the second direction. The first lower upstream passage (54) extends from the vicinity of the front surface (20c) of the discharge cell (20) to the vicinity of the high-voltage side inflow opening (O3). The plurality of first lower upstream passages (54) are arranged in parallel to each other at equal intervals in the right-left direction. The front end (the inflow end) of each first lower upstream passage (54) is located to overlap the low-voltage side inflow opening (O1) in the third direction.

The first lower downstream passage (55) extends in the front-back direction as the second direction. The first lower downstream passage (55) extends from the vicinity of the front surface (20c) of the discharge cell (20) to the vicinity of the high-voltage side outflow opening (O4). The plurality of first lower downstream passages (55) are arranged in parallel to each other at equal intervals in the right-left direction. The front end (the outflow end) of each first lower downstream passage (55) is located to overlap the low-voltage side outflow opening (O2) in the third direction.

The upper side of the first lower upstream passage (54) from which the inflow end (the front end) and the outflow end (the rear end) are excluded is closed by the first middle plate (50C). The lower side of the first lower upstream passage (54) from which the inflow end (the front end) is excluded is closed by the first lower partition plate (50E). The upper side of the first lower downstream passage (55) from which the outflow end (the front end) and the inflow end (the rear end) are excluded is closed by the first middle plate (50C). The lower side of the first lower downstream passage (55) from which the outflow end (the front end) is excluded is closed by the first lower partition plate (50E).

### (2-3-5) First Lower Partition Plate

The first lower partition plate (50E) includes a gas inflow opening (O5), a gas outflow opening (O6), a low-voltage side inflow opening (O1), a low-voltage side outflow opening (O2), a high-voltage side inflow opening (O3), and a high-voltage side outflow opening (O4). These openings penetrate the first lower partition plate (50E) in the third direction.

### (2-4) Discharge Unit

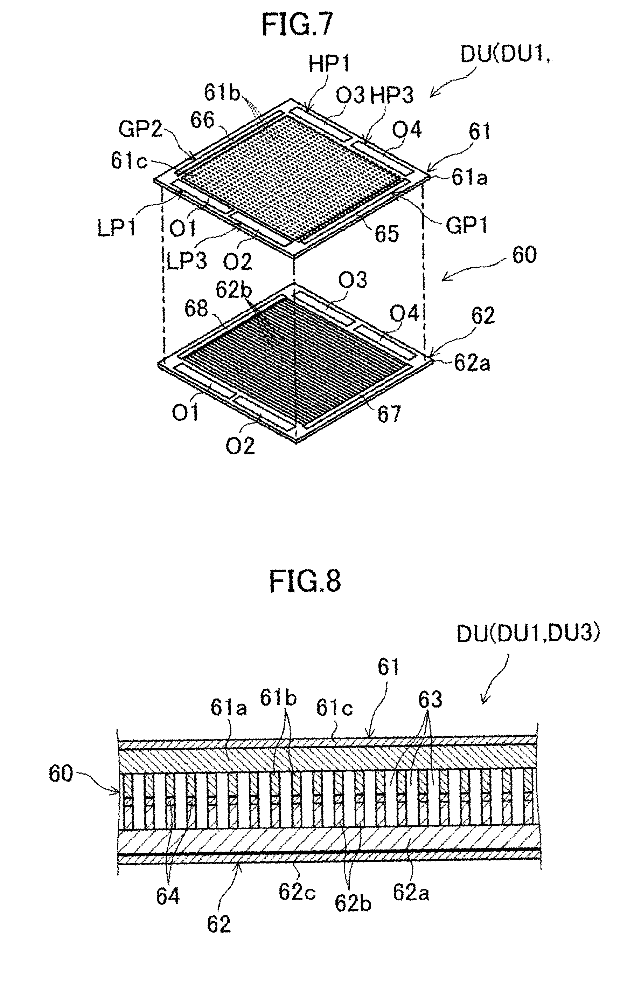

As illustrated in FIG. 7 and 8, the discharge unit (DU) includes a discharge unit (60). The discharge unit (60) includes a low-voltage electrode module (61) and a high-voltage electrode module (62) that face each other. In the first discharge unit (DU1) and the third discharge unit (DU3), the low-voltage electrode module (61) is located on the upper side, and the high-voltage electrode module (62) is located on the lower side. In the second discharge unit (DU2), the high-voltage electrode module (62) is located on the upper side, and the low-voltage electrode module (61) is located on the lower side. The discharge unit (60) includes a discharge space (63) that is formed between the low-voltage electrode module (61) and the high-voltage electrode module (62).

In the discharge cell (20), the high-voltage electrode modules (62) of the discharge units (DU) adjacent to each other face each other in the third direction, and the low-voltage electrode modules (61) of the discharge units (DU) adjacent to each other face each other (see FIG. 10 and 11).

The low-voltage electrode module (61) includes a first base (61a) and a plurality of first protrusions (61b) that protrude from the first base (61a) toward the high-voltage electrode module (62). The first base (61a) forms the body of the substrate (S). The first base (61a) is a flat plate that is rectangular parallelopiped in plan view. The first base (61a) forms a low-voltage side dielectric. A low-voltage electrode (61c) is formed on the back surface (the top surface) of the first base (61a). The low-voltage electrode (61c) is electrically connected with the low-voltage side (the ground side) of the power supply unit (11). The low-voltage electrode (61c) is a metallic film, but may be a plate electrode. The first protrusions (61b) is formed in a bar shape that is laterally long in the right-left direction. The plurality of first protrusions (61b) are arranged in parallel to each other at equal intervals in the front-back direction.

The high-voltage electrode module (62) includes a second base (62a) and a plurality of second protrusions (62b) that protrude from the second base (62a) toward the low-voltage electrode module (61). The second base (62a) forms the body of the substrate (S). The second base (62a) is a flat plate that is rectangular in plan view. The second base (62a) forms a high-voltage side dielectric. A high-voltage electrode (62c) is formed on the back surface (the bottom surface) of the second base (62a). The high-voltage electrode (62c) is electrically connected with the high-voltage side of the power supply unit (11). The high-voltage electrode (62c) is a metallic film, but may be a plate electrode. The second protrusion (62b) is formed in a bar shape that is laterally long in the right-left direction. The plurality of second protrusions (62b) are arranged in parallel to each other at equal intervals in the front-back direction.

The first protrusion (61b) and the second protrusion (62b) are configured so that a glass-made bonding layer (64) is formed in the third direction between the tip of the first protrusion (61b) and the tip of the second protrusion (62b). The bonding layer (64) forms an insulator.

A plurality of discharge spaces (63) each surrounded by the first base (61a), the first protrusion (61b), the second base (62a), and the second protrusion (62b) are formed. These discharge spaces (63) are the spaces that are laterally long in the right-left direction. When voltage is applied to the high-voltage electrode (62c), discharge (strictly speaking, barrier discharge) occurs in the discharge space (63). In the discharge space (63), gas (oxygen gas and ozone gas) flows in the right-left direction as the first direction.

The first base (61a) includes a first discharge side inflow passage (65) and a first discharge side outflow passage (66). The first discharge side inflow passage (65) and the first discharge side outflow passage (66) penetrate the first base (61a) in the third direction. The first discharge side inflow passage (65) communicates with the gas inflow opening (O5) of the first lower partition plate (50E), and the second discharge side outflow passage (68) communicates with the gas outflow opening (O6) of the first lower partition plate (50E).

The first discharge side inflow passage (65) is located along the right surface (20e) of the discharge cell (20). The first discharge side inflow passage (65) extends in the front-back direction along the right side of the first base (61a). The first discharge side inflow passage (65) communicates with the inflow ends of the plurality of discharge spaces (63). The first discharge side outflow passage (66) is located along the left surface (20f) of the discharge cell (20). The first discharge side outflow passage (66) extends in the front-back direction along the left side of the first base (61a). The first discharge side outflow passage (66) communicates with the outflow ends of the plurality of discharge spaces (63).

The second base (62a) includes a second discharge side inflow passage (67) and a second discharge side outflow passage (68). The second discharge side inflow passage (67) and the second discharge side outflow passage (68) penetrate the second base (62a) in the third direction. The second discharge side inflow passage (67) is located along the right surface (20e) of the discharge cell (20). The second discharge side inflow passage (67) extends in the front-back direction along the right side of the second base (62a). The second discharge side inflow passage (67) communicates with the inflow ends of the plurality of discharge spaces (63). The second discharge side inflow passage (67) communicates with the first discharge side inflow passage (65) of the first base (61a). The second discharge side outflow passage (68) is located along the left surface (20f) of the discharge cell (20). The second discharge side outflow passage (68) extends in the front-back direction along the left side of the second base (62a). The second discharge side outflow passage (68) communicates with the outflow ends of the plurality of discharge spaces (63). The second discharge side outflow passage (68) communicates with the first discharge side outflow passage (66) of the first base (61a).

The first base (61a) and the second base (62a) each include a low-voltage side inflow opening (O1), a low-voltage side outflow opening (O2), a high-voltage side inflow opening (O3), and a high-voltage side outflow opening (O4).

### (2-5) High-Voltage Side Cooling Unit

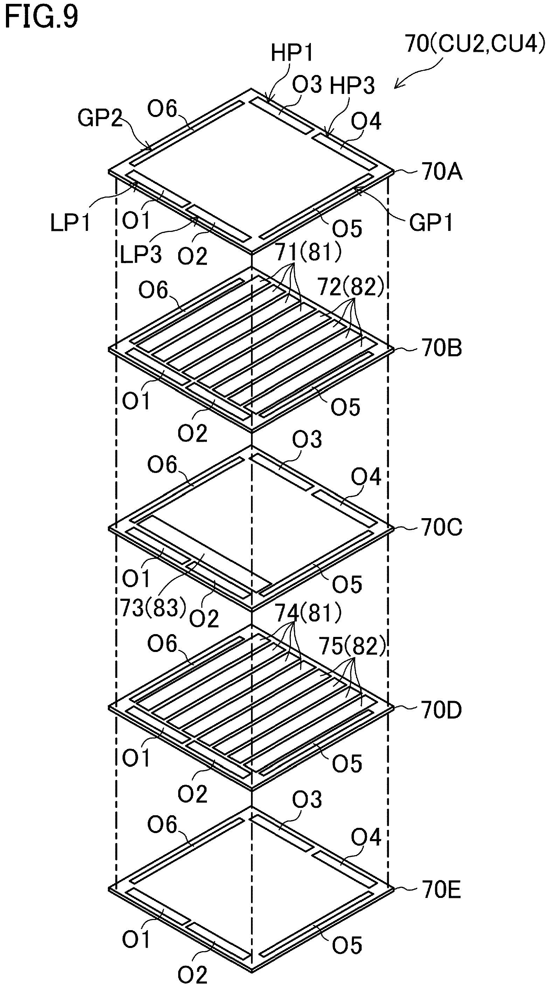

The high-voltage side cooling unit (70) is adjacent to the high-voltage electrode module (62) of the discharge unit (DU). As illustrated in FIG. 9, the high-voltage side cooling unit (70) includes, in the order from top to bottom, a second upper partition plate (70A), a second upper passage plate (70B), a second middle plate (70C), a second lower passage plate (70D), and a second lower partition plate (70E). The configurations of the second upper partition plate (70A) and the second lower partition plate (70E) are the same as the above-described configurations of the first upper partition plate (50A) and the first lower partition plate (50E), and thus the detailed description thereof will be omitted.

### (2-5-1) Second Upper Passage Plate

The second upper passage plate (70B) include a gas inflow opening (O5), a gas outflow opening (O6), a low-voltage side inflow opening (O1), and a low-voltage side outflow opening (O2). These openings penetrate the second upper passage plate (70B) in the third direction.

The second upper passage plate (70B) include a second upper upstream passage (71) and a second upper downstream passage (72). These passages penetrate the second upper passage plate (70B) in the third direction. The second upper passage plate (70B) of the embodiment includes four second upper upstream passages (71) and four second upper downstream passages (72).

The second upper upstream passage (71) extends in the front-back direction as the second direction. The second upper upstream passage (71) extends from the vicinity of the low-voltage side inflow opening (O1) to the vicinity of the back surface (20d) of the discharge cell (20). The plurality of second upper upstream passages (71) are arranged in parallel to each other at equal intervals in the right-left direction. The rear end (the inflow end) of each second upper upstream passage (71) is located to overlap the high-voltage side inflow opening (O3) in the third direction.

The second upper downstream passage (72) extends in the front-back direction as the second direction. The second upper downstream passage (72) extends from the vicinity of the low-voltage side outflow opening (O2) to the vicinity of the back surface (20d) of the discharge cell (20). The plurality of second upper downstream passages (72) are arranged in parallel to each other at equal intervals in the right-left direction. The rear end (the outflow end) of each second upper downstream passage (72) is located to overlap the high-voltage side outflow opening (O4) in the third direction.

The upper side of the second upper upstream passage (71) from which the inflow end (the rear end) is excluded is closed by the second upper partition plate (70A). The lower side of the second upper upstream passage (71) from which the inflow end (the rear end) and the outflow end (the front end) are excluded is closed by the second middle plate (70C). The upper side of the second upper downstream passage (72) from which the outflow end (the rear end) is excluded is closed by the second upper partition plate (70A). The lower side of the second upper downstream passage (72) from which the inflow end (the front end) and the outflow end (the rear end) are excluded is closed by the first middle plate (50C).

### (2-5-2) Second Middle Plate

The second middle plate (70C) includes a gas inflow opening (O5), a gas outflow opening (O6), a low-voltage side inflow opening (O1), a low-voltage side outflow opening (O2), a high-voltage side inflow opening (O3), and a high-voltage side outflow opening (O4). These openings penetrate the second middle plate (70C) in the third direction.

The second middle plate (70C) includes a second middle passage (73). The second middle passage (73) is located along the front surface (20c) of the discharge cell (20) and extends in the right-left direction as the first direction. Specifically, the second middle passage (73) extends from the vicinity of the gas inflow opening (O5) to the vicinity of the gas outflow opening (O6). The upstream portion of the second middle passage (73) is adjacent to the low-voltage side inflow opening (O1), and the downstream portion of the second middle passage (73) is adjacent to the low-voltage side outflow opening (O2). The upstream portion of the second middle passage (73) is located to overlap the front end (the outflow end) of each second upper upstream passage (71) in the third direction. The downstream portion of the second middle passage (73) is located to overlap the front end (the inflow end) of each second upper downstream passage (72) in the third direction.

### (2-5-3) Second Lower Passage Plate

The structure of the second lower passage plate (70D) is basically the same as the structure of the second upper passage plate (70B). The second lower passage plate (70D) includes a gas inflow opening (O5), a gas outflow opening (O6), a low-voltage side inflow opening (O1), and a low-voltage side outflow opening (O2). These openings penetrate the second lower passage plate (70D) in the third direction.

The second lower passage plate (70D) includes a second lower upstream passage (74) and a second lower downstream passage (75). These passages penetrate the second lower passage plate (70D) in the third direction. The second lower passage plate (70D) of the embodiment includes four second lower upstream passages (74) and four second lower downstream passages (75).

The second lower upstream passage (74) extends in the front-back direction as the second direction. The second lower upstream passage (74) extends from the vicinity of the low-voltage side inflow opening (O1) to the vicinity of the back surface (20d) of the discharge cell (20). The plurality of second lower upstream passages (74) are arranged in parallel to each other at equal intervals in the right-left direction. The rear end (the inflow end) of each second lower upstream passage (74) is located to overlap the high-voltage side inflow opening (O3) in the third direction.

The second lower downstream passages (75) extends in the front-back direction as the second direction. The second lower downstream passage (75) extends from the vicinity of the low-voltage side outflow opening (O2) to the vicinity of the back surface (20d) of the discharge cell (20). The plurality of second lower downstream passages (75) are arranged in parallel to each other at equal intervals in the right-left direction. The rear end (the outflow end) of each second lower downstream passage (75) is located to overlap the high-voltage side outflow opening (O4) in the third direction.

The upper side of the second lower upstream passage (74) from which the inflow end (the rear end) and the outflow end (the front end) are excluded is closed by the second middle plate (70C). The lower side of the second lower upstream passage (74) from which the inflow end (the rear end) is excluded is closed by the second lower partition plate (70E). The upper side of the second lower downstream passage (75) from which the inflow end (the front end) and the outflow end (the rear end) are excluded is closed by the second middle plate (70C). The lower side of the second lower downstream passage (75) from which the outflow end (the rear end) is excluded is closed by the second lower partition plate (70E).

### (2-6) End Plate

As illustrated in FIG. 4, the end plate (E) is a substrate that is located at the lowermost side of the discharge cell 20. The end plate (E) does not include openings. The end plate (E) closes the gas inflow opening (O5), the gas outflow opening (O6), the low-voltage side inflow opening (O1), the low-voltage side outflow opening (O2), the high-voltage side inflow opening (O3), and the high-voltage side outflow opening (O4) of the adjacent substrate (S).

### (3) Heating Medium Passage

The discharge cell (20) includes a heating medium passage (P) through which cooling water flows. The heating medium passage (P) will be described in detail with reference mainly to FIG. 10 and FIG. 11. FIG. 10 shows an upstream passage of the heating medium passage (P), and FIG. 11 shows a downstream passage of the heating medium passage (P).

The heating medium passage (P) includes a high-voltage side passage (HP) corresponding to the high-voltage electrode module (62) and a low-voltage side passage (LP) corresponding to the low-voltage electrode module (61). The high-voltage side passage (HP) and the low-voltage side passage (LP) branch from the outflow end of the heating medium inflow passage (33) (see FIG. 10). The outflow end of the cooling water inlet is a flow separator (86) that allows a heating medium to flow separately into the high-voltage side passage (HP) and the low-voltage side passage (LP). Each outflow end of the high-voltage side passage (HP) and the low-voltage side passage (LP) is connected with the inflow end of the heating medium outflow passage (34) (see FIG. 11). The inflow end of the heating medium outflow passage (34) is a junction (87) at which the heating media from the high-voltage side passage (HP) and the low-voltage side passage (LP) combine.

### (3-1) High-Voltage Side Passage

The high-voltage side passage (HP) includes the high-voltage side inflow branch passage (43), the high-voltage side inflow relay passage (39), a high-voltage side inflow passage (HP1), the high-voltage side cooling passage (HP2), a high-voltage side outflow passage (HP3), the high-voltage side outflow relay passage (40), and the high-voltage side outflow branch passage (44).

The high-voltage side inflow passage (HP1) is a passage that allows cooling water as a heating medium to flow into the high-voltage side cooling passage (HP2). The high-voltage side inflow passage (HP1) is formed in each of the cooling unit (CU) and the discharge unit (DU). In each of the cooling unit (CU) and discharge unit (DU), the plurality of high-voltage side inflow openings (O3) are connected in the top-bottom direction in order to form the high-voltage side inflow passage (HP1). The high-voltage side inflow passage (HP1) is located along the back surface (20d) as the third surface of the discharge cell (20).

The high-voltage side cooling passage (HP2) is a cooling passage through which a heating medium that cools the high-voltage electrode module (62) flows. The high-voltage side cooling passage (HP2) is adjacent to the high-voltage electrode module (62). In the embodiment, the second cooling unit (CU2) and the fourth cooling unit (CU4) includes the high-voltage side cooling passage (HP2). The high-voltage side cooling passage (HP2) includes the second upper upstream passage (71), the second lower upstream passage (74), the second middle passage (73), the second upper downstream passage (72), and the second lower downstream passage (75). The second upper upstream passage (71) and the second lower upstream passage (74) each form a first cooling passage (81), the second upper downstream passage (72) and the second lower downstream passage (75) each form a second cooling passage (82), and the second middle passage (73) forms a middle passage (83).

The high-voltage side outflow passage (HP3) is a passage that allows a heating medium to flow out of the high-voltage side cooling passage (HP2). The high-voltage side outflow passage (HP3) is formed in each of the cooling unit (CU) and the discharge unit (DU). In the cooling unit (CU) and the discharge unit (DU), the plurality of high-voltage side outflow openings (O4) are connected in the top-bottom direction in order to form the high-voltage side outflow passage (HP3). The high-voltage side outflow passage (HP3) is located along the back surface (20d) as the third surface of the discharge cell (20).

Of the high-voltage side passage (HP), the passage from the flow separator (86) as the outflow end of the heating medium inflow passage (33) to the inflow end of the high-voltage side cooling passage (HP2) closest to the flow separator (86) forms the high-voltage side inflow main passage (91). Of the high-voltage side passage (HP), the passage from the junction (87) as the inflow end of the heating medium outflow passage (34) to the outflow end of the high-voltage side cooling passage (HP2) closest to the junction (87) forms the high-voltage side outflow main passage (92). The high-voltage side inflow main passage (91) is a passage from the point (a) to the point (b) in FIG. 10. The high-voltage side outflow main passage (92) is a passage from the point (d) to the point (e) in FIG. 11.

In the discharge cell (20), the high-voltage side inflow passages (HP1) of the plurality of discharge units (DU) and the plurality of cooling units (CU) communicate with each other in the top-bottom direction. In the discharge cell (20), the high-voltage side outflow passages (HP3) of the plurality of discharge units (DU) and the plurality of cooling units (CU) communicate with each other in the top-bottom direction. Accordingly, in the discharge cell (20), a plurality of high-voltage side cooling passages (HP2) are formed in parallel to each other.

### (3-2) Low-Voltage Side Passage

The low-voltage side passage (LP) includes the low-voltage side inflow branch passage (41), the low-voltage side inflow relay passage (37), a low-voltage side inflow passage (LP1), a low-voltage side cooling passage (LP2), a low-voltage side outflow passage (LP3), the low-voltage side outflow relay passage (38), and the low-voltage side outflow branch passage (42).

The low-voltage side inflow passage (LP1) is a passage that allows cooling water as a heating medium to flow into the low-voltage side cooling passage (LP2). The low-voltage side inflow passage (LP1) is formed in each of the cooling unit (CU) and the discharge unit (DU). In the cooling unit (CU) and the discharge unit (DU), the plurality of low-voltage side inflow openings (O1) are connected in the top-bottom direction in order to form the low-voltage side inflow passage (LP1). The low-voltage side inflow passage (LP1) is located along the front surface (20c) as the fourth surface of the discharge cell (20).

The low-voltage side cooling passage (LP2) is a cooling passage through which a heating medium that cools the low-voltage electrode module (61) flows. The low-voltage side cooling passage (LP2) is adjacent to the low-voltage electrode module (61). In the embodiment, the first cooling unit (CU1) and the third cooling unit (CU3) includes the low-voltage side cooling passage (LP2). The low-voltage side cooling passage (LP2) includes a first upper upstream passage (51), a first lower upstream passage (54), a first middle passage (53), a first upper downstream passage (52), and a first lower downstream passage (55). The first upper upstream passage (51) and the first lower upstream passage (54) each form a first cooling passage (81), the first upper downstream passage (52) and the first lower downstream passage (55) each form a second cooling passage (82), and the first middle passage (53) forms a middle passage (83).

The low-voltage side outflow passage (LP3) is a passage that allows a heating medium to flow out of the low-voltage side cooling passage (LP2). The low-voltage side outflow passage (LP3) is formed in each of the cooling unit (CU) and the discharge unit (DU). In the cooling unit (CU) and the discharge unit (DU), the plurality of low-voltage side outflow openings (O2) are connected in the top-bottom direction in order to form the low-voltage side outflow passage (LP3). The low-voltage side outflow passage (LP3) is located along the front surface (20c) as the fourth surface of the discharge cell (20).

Of the low-voltage side passage (LP), the passage from the flow separator (86) as the outflow end of the heating medium inflow passage (33) to the low-voltage side cooling passage (LP2) closest to the flow separator (86) forms the low-voltage side inflow main passage (93). Of the low-voltage side passage (LP), the passage from the junction (87) as the inflow end of the heating medium outflow passage (34) to the low-voltage side cooling passage (LP2) closest to the junction (87) forms the low-voltage side outflow main passage (94). The low-voltage side inflow main passage (93) is a passage from the point (a) to the point (c) in FIG. 10. The low-voltage side outflow main passage (94) is a passage from the point (d) to the point (f) in FIG. 11.

In the discharge cell (20), the low-voltage side inflow passages (LP1) of the plurality of discharge units (DU) and the plurality of cooling units (CU) communicate with each other in the top-bottom direction. In the discharge cell (20), the low-voltage side outflow passage (LP3) of the plurality of discharge units (DU) and the plurality of cooling units (CU) communicate with each other in the top-bottom direction. Accordingly, in the discharge cell (20), a plurality of low-voltage side cooling passages (LP2) are arranged in parallel to each other.

### (3-3) Ground Portion

The heating medium passage (P) is connected with the ground portions (8A, 8B). The ground portions (8A, 8B) are connected with the ground. The ground portions (8A, 8B) have a function of diverting currents to the ground, where those currents have flowed through the heating medium passage (P) due to discharge of the discharge unit (60). As illustrated in FIG. 10 and FIG. 11, the ground portions (8A, 8B) include the first ground portion (8A) and the second ground portion (8B). The first ground portion (8A) and the second ground portion (8B) are provided in the header unit (HU).

The first ground portion (8A) is provided in a passage that is located on the inflow side of the heating medium passage (P) and that allows a heating medium to flow separately. Specifically, the first ground portion (8A) is provided between the high-voltage side cooling passage (HP2) closest to the flow separator (86) and the low-voltage side cooling passage (LP2) closest to the flow separator (86). The first ground portion (8A) of the embodiment is provided in the flow separator (86). The first ground portion (8A) includes a stainless joint that is connected to the ground, for example.

A passage between the first ground portion (8A) and the high-voltage side cooling passage (HP2) closest to the first ground portion (8A) forms the first passage (F1). That is, the first passage (F1) is a passage between the first ground portion (8A) to the point (b). A passage between the first ground portion (8A) and the low-voltage side cooling passage (LP2) closest to the first ground portion (8A) forms the second passage (F2). That is, the second passage (F2) is a passage between the first ground portion (8A) to the point (c). The first ground portion (8A) of the embodiment is provided in the flow separator (86). Thus, the first passage (F1) of the embodiment substantially forms the high-voltage side inflow main passage (91). The second passage (F2) of the embodiment substantially forms the low-voltage side inflow main passage (93).

The second ground portion (8B) is provided in a passage that is located on the outflow side of the heating medium passage (P) and that combines heating media. Specifically, the second ground portion (8B) is provided between the high-voltage side cooling passage (HP2) closest to the junction (87) and the low-voltage side cooling passage (LP2) closest to the junction (87). The second ground portion (8B) of the embodiment is provided in the junction (87). The second ground portion (8B) includes a stainless joint that is connected to the ground, for example.

A passage between the second ground portion (8B) and the high-voltage side cooling passage (HP2) closest to the second ground portion (8B) forms the third passage (F3). That is, the third passage (F3) is a passage between the second ground portion (8B) to the point (e). A passage between the second ground portion (8B) and the low-voltage side cooling passage (LP2) closest to the second ground portion (8B) forms the fourth passage (F4). That is, the fourth passage (F4) is a passage between the second ground portion (8B) to the point (f). The second ground portion (8B) of the embodiment is provided in the junction (87). Thus, the third passage (F3) of the embodiment substantially forms the high-voltage side outflow main passage (92). The fourth passage (F4) of the embodiment substantially forms the low-voltage side outflow main passage (94).

### (4) Gas Inflow Passage and Gas Outflow Passage

A gas inflow passage (GP1) is formed in each of the cooling unit (CU) and the discharge unit (DU). In the cooling unit (CU), a plurality of gas inflow openings (O5) are connected in the top-bottom direction in order to form the gas inflow passage (GP1). In the discharge unit (DU), the first discharge side inflow passage (65) and the second discharge side inflow passage (67) are connected in the top-bottom direction in order to form the gas inflow passage (GP1). The gas inflow passage (GP1) is located along the right surface (20e) as the first surface of the discharge cell (20).

A gas outflow passage (GP2) is formed in each of the cooling unit (CU) and the discharge unit (DU). In the cooling unit (CU), a plurality of gas outflow openings (O6) are connected in the top-bottom direction in order to form the gas outflow passage (GP2). In the discharge unit (DU), the first discharge side outflow passage (66) and the second discharge side outflow passage (68) are connected in the top-bottom direction in order to form the gas outflow passage (GP2). The gas outflow passage (GP2) is located along the left surface (20f) as the second surface of the discharge cell (20).

### (5) Operation

The basic operation of the ozone generation apparatus (1) will be described below. When the ozone generation apparatus (1) is operating, the power supply unit (11) applies high voltage between the high-voltage electrodes (62c) and the low-voltage electrodes (61c) of the discharge unit (60). The oxygen gas supply unit (2) supplies oxygen gas to the discharge cell (20). The heating medium supply unit (4) supplies cooling water to the discharge cell (20).

The oxygen gas flows through the gas inlet (31), the first gas inflow relay passage (35), and the second gas inflow relay passage (45) in sequence, and then flows through the gas inflow passage (GP1). From the gas inflow passage (GP1), the oxygen gas flows separately into the discharge spaces (63) of the discharge units (DU). In the discharge space (63), barrier discharge is generated between the high-voltage electrode module (62) and the low-voltage electrode module (61). As a result, in the discharge space (63), ozone gas is generated from oxygen gas. In the discharge spaces (63), the concentration of ozone gas increases from the upstream side to the downstream side, specifically, from right to left in the first direction.

The gases each containing the ozone gas having flowed out of each discharge space (63) combine at the gas outflow passage (GP2), then flow through the second gas outflow relay passage (46), the first gas outflow relay passage (36), and the gas outlet (32) in sequence, and then flow out of the discharge cell (20). This gas is supplied to a predetermined object from the ozone generation apparatus (1).

After flowing through the heating medium inflow passage (33), the cooling water flows separately into the high-voltage side passage (HP) and the low-voltage side passage (LP).

The cooling water having flowed into the high-voltage side passage (HP2) flows through the high-voltage side inflow branch passage (43) and the high-voltage side inflow relay passage (39) in sequence, and then flows through the high-voltage side inflow passage (HP1). From the high-voltage side inflow passage (HP1), the cooling water flows separately into the plurality of high-voltage side cooling passages (HP2). The cooling water having flowed into the high-voltage side cooling passage (HP2) is mainly used to cool the high-voltage electrode module (62). The cooling water having flowed out of each high-voltage side cooling passage (HP2) combines at the high-voltage side outflow passage (HP3), and then flows through the high-voltage side outflow relay passage (40) and the high-voltage side outflow branch passage (44) in sequence.

The cooling water having flowed into the low-voltage side passage (LP) flows through the low-voltage side inflow branch passage (41) and the low-voltage side inflow relay passage (37) in sequence, and then flows through the low-voltage side inflow passage (LP1). From the low-voltage side inflow passage (LP1), the cooling water flows separately into the plurality of low-voltage side cooling passage (LP2). The cooling water having flowed into the low-voltage side cooling passage (LP2) is mainly used to cool the low-voltage electrode module (61). The cooling water having flowed out of each low-voltage side cooling passage(LP2) combines at the low-voltage side outflow passage (LP3), and then flows through the low-voltage side outflow relay passage (38) and the low-voltage side outflow branch passage (42) in sequence.

The cooling water of the high-voltage side outflow branch passage (44) and the cooling water of the low-voltage side outflow branch passage (42) combine in the heating medium outflow passage (34), and then is discharged outside the discharge cell (20).

### (6) Measures against Power Loss

### (6-1) Problem

When the power supply unit (11) applies high voltage to the high-voltage electrode (62c), current can flow from the high-voltage electrode module (62) to the ground portions (8A, 8B) through the nearby cooling passages (HP2, LP2). Accordingly, power is unnecessarily consumed during a discharge operation. As a result, the amount of ozone generated by the discharge cell (20) might decrease, and thus the discharge cell (20) needs to be larger to increase the amount of ozone generated by the discharge cell (20). Accordingly, in the embodiment, the following measures are employed to reduce such power loss.

### (6-2) Configuration of Heating Medium Passage

As illustrated in FIG. 10, in the heating medium passage (P), the high-voltage side passage (HP) and the low-voltage side passage (LP) branch from the flow separator (86) of the heating medium inflow passage (33). The high-voltage side passage (HP) and the low-voltage side passage (LP) are connected with the junction (87) of the heating medium outflow passage (34). In the high-voltage side passage (HP), the plurality of high-voltage side cooling passages (HP2) are connected in parallel. In the low-voltage side passage (LP), the plurality of low-voltage side cooling passages (LP2) are connected in parallel.

Here, the electric resistance value of the first passage (F1) is defined as R1. The electric resistance value of the second passage (F2) is defined as R2. The electric resistance value of the third passage (F3) is defined as R3. The electric resistance value of the fourth passage (F4) is defined as R4.

In the heating medium passage (P) of the embodiment, the passage length L1 of the first passage (F 1) is longer than the passage length L2 of the second passage (F2). Here, the first passage (F1) and the second passage (F2) are equal to each other in other parameters (for example, passage widths, resistance values attributed to materials of members around the passages, and the like) that affect the electric resistance values of those passages. Thus, if L1 is longer than L2, the electric resistance value R1 of the first passage (F1) is higher than the electric resistance value R2 of the second passage (F2). In other words, in this embodiment, the passage length of the high-voltage side inflow main passage (91) is longer than the passage length of the low-voltage side inflow main passage (93). The electric resistance value of the high-voltage side inflow main passage (91) is higher than the electric resistance value of the low-voltage side inflow main passage (93).

According to this configuration, it is difficult for current to flow from the high-voltage side cooling passage (HP2) to the first ground portion (8A) through the first passage (F1) (or the high-voltage side inflow main passage (91)), and thus it is possible to reduce power loss. Here, in the embodiment, as illustrated in FIG. 5, the high-voltage side inflow branch passage (43) includes a first bent portion (95). The first bent portion (95) is shaped to protrude toward the center of the second header plate (30B). According to this configuration, it is possible to easily increase the passage length L1 of the high-voltage side inflow main passage (91) or the first passage (F1).

In the heating medium passage (P), the passage length L3 of the third passage (F3) is longer than the passage length L4 of the fourth passage (F4). Here, the third passage (F3) and the fourth passage (F4) are equal to each other in other parameters (for example, passage widths, resistance values due to materials of members around the passages, and the like) that affect the electric resistance values of those passages. Thus, if L3 is longer than L4, the electric resistance value R3 of the third passage (F3) is higher than the electric resistance value R4 of the fourth passage (F4). In other words, in this embodiment, the passage length of the high-voltage side outflow main passage (92) is longer than the passage length of the low-voltage side outflow main passage (94). The electric resistance value of the high-voltage side outflow main passage (92) is higher than the electric resistance value of the low-voltage side outflow main passage (94).

According to this configuration, it is difficult for current to flow from the high-voltage side cooling passage (HP2) to the second ground portion (8B) through the third passage (or the high-voltage side outflow main passage (92)), and thus it is possible to reduce power loss. Here, in the embodiment, as illustrated in FIG. 5, the high-voltage side outflow branch passage (44) includes a second bent portion (96). The second bent portion (96) is shaped to protrude toward the center of the second header plate (30B). According to this configuration, it is possible to easily increase the passage length L3 of the high-voltage side outflow main passage (92).

In the heating medium passage (P), the passage length of the high-voltage side inflow main passage (91) is substantially equal to the passage length of the high-voltage side outflow main passage (92). Thus, the electric resistance value of the high-voltage side inflow main passage (91) is substantially equal to the electric resistance value of the high-voltage side outflow main passage (92). If the passage length of the high-voltage side inflow main passage (91) and the passage length of the high-voltage side outflow main passage (92) are different, the flow resistance value of one of the two passages of which the passage length is shorter dominates in reduction in the power loss. Thus, the flow resistance value of one of the two passages of which the passage length is longer does not contribute to reduction in the power loss. In contrast, if the passage length of the high-voltage side inflow main passage (91) and the passage length of the high-voltage side outflow main passage (92) are equal, the passage length of each of the high-voltage side inflow main passage (91) and the high-voltage side outflow main passage (92) can be minimized as appropriate. Thus, it is possible to downsize the header unit (HU) and consequently the discharge cell (20).

### (6-3) Arrangement Of Discharge Unit

In the embodiment, as illustrated in FIG. 10 and 11, the high-voltage electrode modules (62) of the discharge units (60) adjacent to each other in the third direction face each other with the high-voltage side cooling passage (HP2) sandwiched therebetween. Specifically, the high-voltage electrode module (62) of the first discharge unit (DU1) and the high-voltage electrode module (62) of the second discharge unit (DU2) face each other with the high-voltage side cooling passage (HP2) of the second cooling unit (CU2) sandwiched therebetween. The low-voltage electrode modules (61) of the discharge units (60) adjacent to each other in the third direction face each other with the low-voltage side cooling passage (LP2) sandwiched therebetween. Specifically, the low-voltage electrode module (61) of the second discharge unit (DU2) and the low-voltage electrode module (61) of the third discharge unit (DU3) face each other with the low-voltage side cooling passage (LP2) of the third cooling unit (CU3) sandwiched therebetween.

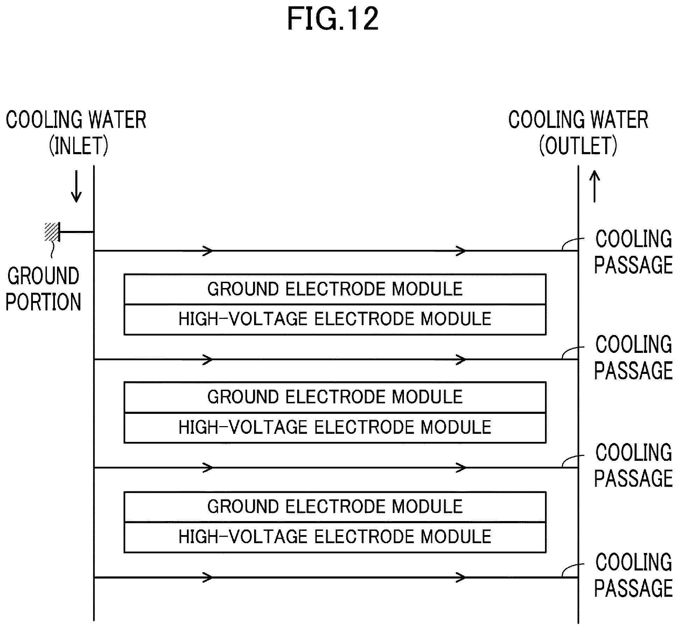

For example, in the comparative example shown in FIG. 12, the high-voltage electrode module and the low-voltage electrode module of the discharge units adjacent to each other face each other, and thus current can leak from the high-voltage electrode module toward the low-voltage electrode module through the cooling passage. In contrast, according to the configuration of the embodiment, the high-voltage electrode module (62) and the low-voltage electrode module (61) do not face each other over the cooling passages (HP2, LP2), and thus it is possible to reduce such current leakage. Thus, it is possible to further reduce the power loss.

### (7) Specific Resistance Value of Cooling Water

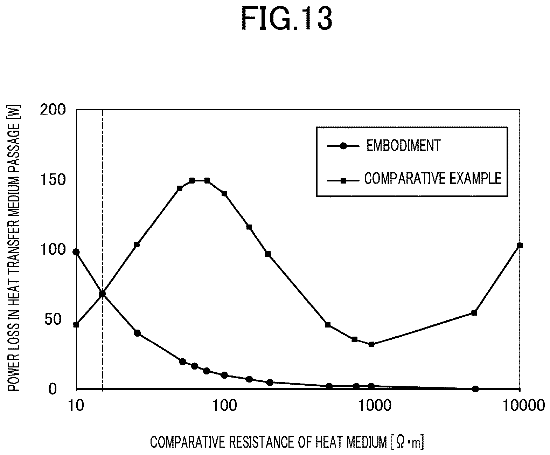

In the embodiment, the heating medium supply unit (4) as a supply unit supplies the heating medium inflow passage (33) with the cooling water of which the specific resistance value is 15 [Ω·m] or higher. The cooling water is city water. By allowing the water of which the specific resistance value is 15 [Ω·m] or higher to flow through the heating medium passage (P), the configuration of the discharge cell (20) of the embodiment can sufficiently achieve the effect of reduction in the power loss. The results of verification of this point are shown in FIG. 13. In this verification, the relationship between the specific resistance value of the heating medium (the cooling water) and the power loss in the heating medium passage (P) was estimated for the discharge cell (20) of the embodiment and the discharge cell of the comparative example (see FIG. 12). Here, an AC high-voltage power supply of which the applied voltage was 2.85 [kV] as a condition of the power supply was used.

As a result of the verification, it can be found that, in the embodiment, as the specific resistance value of the heating medium increases, the power loss can be reduced. Specifically, when the specific resistance value was 15 [Ω·m] or higher, the power loss in the embodiment was smaller than the power loss in the comparative example. From this result, the specific resistance value of the heating medium is preferably 15 [Ω·m] or higher.

Further, when the specific resistance value of the heating medium was 1000 [Ω·m] or higher, there was almost no power loss, and when the same was 1000 [Ω·m] or higher, the power loss was almost zero. From this result, the specific resistance value of the heating medium is preferably 1000 [Ω·m] or higher.

### (8) Other Embodiments

The above embodiment may be configured as follows.

The first ground portion (8A) does not need to be provided at the outflow end of the inflow passage (33) as long as being provided between the high-voltage side cooling passage (HP2) closest to the outflow end of the inflow passage (33) and the low-voltage side cooling passage (LP2) closest to the outflow end of the inflow passage (33). In this case, the first ground portion (8A) is preferably provided in the low-voltage side inflow main passage (93). In this case, the high-voltage side inflow main passage (91) and the low-voltage side inflow main passage (93) may be equal in length.

The second ground portion (8B) does not need to be provided at the inflow end of the outflow passage (34) as long as being provided between the high-voltage side cooling passage (HP2) closest to the inflow end of the outflow passage (34) and the low-voltage side cooling passage (LP2) closest to the inflow end of the outflow passage (34). In this case, the second ground portion (8B) is preferably provided in the low-voltage side outflow main passage (94). In this case, the high-voltage side outflow main passage (92) and the low-voltage side outflow main passage (94) may be equal in length.

Even according to this configuration, it is possible to reduce the power loss if the high-voltage electrode modules (62) of the discharge units (60) adj acent to each other face each other, and the low-voltage electrode modules (61) of the discharge units (60) adjacent to each other face each other.

The electric resistance values of the first passage (F1), the second passage (F2), the third passage (F3), and the fourth passage (F4) may be set based on the parameters other than the passage lengths. Examples of such parameters include passage widths, resistance values attributed to materials of members around the passages, and the like. That is, as described above, the relationship L1 > L2 and L3 > L4 does not need to be satisfied as long as the relationship R1 > R2 and R3 > R4 is satisfied, and the relationship L1 ≤ L2 and L3 ≤ L4 may be employed.

The first protrusion (61b) and the second protrusion (62b) of the discharge unit (60) may be columnar projections.

The heating medium in the heating medium passage (P) does not need to be water, and may be liquid such as coolant or brine. The water may be purified water or may be city water. The electric resistance value of each passage depends on the type of heating medium, which affects the effect of reduction in the power loss.

The number of discharge units (DU) is not limited to the above embodiment. If the number of discharge units (DU) is larger, the number of cooling units (CU) is larger accordingly.

The shape of the discharge cell (20) as viewed in the third direction may be other than rectangular, and may be circular, for example.

The cooling unit (CU) may include one first cooling passage (81) and one second cooling passage (82). In this case, for example, the cooling unit (CU) may be configured without the first upper passage plate (50B) and the second lower passage plate (70D). This cooling unit (CU) can be adjacent to the upper side of the uppermost discharge unit (DU) or can be adjacent to the lower side of the lowermost discharge unit (DU), for example.

In the discharge unit (DU) of the embodiment, each of the high-voltage electrode module (62) and the low-voltage electrode module (61) is provided with the dielectric, but only one of them may be provided with the dielectric. In other words, the discharge unit (DU) does not need to be a so-called double-sided barrier type discharge unit, but may be a single-sided barrier type discharge unit.

While the embodiments and variations have been described above, it will be appreciated that various changes in form and detail may be made without departing from the scope of the claims. Further, the elements of the foregoing embodiments, variations, and other embodiments may be combined or substituted as appropriate.

The above mentioned "first", "second", "third", . . . are used to distinguish the words and phrases to which these descriptions are given, and do not limit the number or even the order of these words and phrases.

### INDUSTRIAL APPLICABILITY

As described above, the present disclosure is useful for discharge cells and ozone generation apparatuses.

### DESCRIPTION OF REFERENCE CHARACTERS

- 1: Ozone Generation Apparatus
- 8A: First Ground Portion
- 8B: Second Ground Portion
- 33: Heating Medium Inflow Passage (Inflow Passage)
- 34: Heating Medium Outflow Passage (Outflow Passage)
- 60: Discharge Unit
- 61: Low-Voltage Electrode Module
- 61a: First Base (Dielectric on Low-Voltage Side)
- 61c: Low-Voltage Electrode
- 62: High-Voltage Electrode Module
- 62a: Second Base (Dielectric on High-Voltage Side)
- 62c: High-Voltage Electrode
- 91: High-Voltage Side Inflow Main Passage
- 92: High-Voltage Side Outflow Main Passage
- 93: Low-Voltage Side Inflow Main Passage
- 94: Low-Voltage Side Outflow Main Passage
- 95: First Bent Portion
- 96: Second Bent Portion
- F1: First Passage
- F2: Second Passage
- F3: Third Passage
- F4: Fourth Passage
- HP: High-Voltage Side Passage
- HP2: High-Voltage Side Cooling Passage
- LP: Low-Voltage Side Passage
- LP2: Low-Voltage Side Cooling Passage
- P: Heating Medium Passage

## Claims

1. A discharge cell for an ozone generation apparatus, comprising:
a plurality of discharge units (60) including a high-voltage electrode module (62) having a high-voltage electrode (62c) and a low-voltage electrode module (61) having a low-voltage electrode (61c), where at least one of the high-voltage electrode module (62) or the low-voltage electrode module (61) is provided with a dielectric (61a, 62a);
a heating medium passage (P) through which a heating medium that cools the discharge units (60) flows; and
a ground portion (8A, 8B) connected with the heating medium passage (P),
wherein
the heating medium passage (P) includes
an inflow passage (33) into which the heating medium flows,
a high-voltage side passage (HP) and a low-voltage side passage (LP) each branching from an outflow end of the inflow passage (33), and
an outflow passage (34) with which each outflow end of the high-voltage side passage (HP) and the low-voltage side passage (LP) is connected,
the high-voltage side passage (HP) includes a plurality of high-voltage side cooling passages (HP2) connected in parallel to each other so as to be each adjacent to the high-voltage electrode module (62) of the plurality of discharge units (60),
the low-voltage side passage (LP) includes a plurality of low-voltage side cooling passages (LP2) connected in parallel to each other so as to be each adjacent to the low-voltage electrode module (61) of the plurality of discharge units (60),
the ground portion (8A, 8B) includes
a first ground portion (8A) provided between one of the high-voltage side cooling passages (HP2) that is closest to the outflow end of the inflow passage (33) and one of the low-voltage side cooling passages (LP2) that is closest to the outflow end of the inflow passage (33), and
a second ground portion (8B) provided between one of the high-voltage side cooling passages (HP2) that is closest to an inflow end of the outflow passage (34) and one of the low-voltage side cooling passages (LP2) that is closest to the inflow end of the outflow passage (34),
an electric resistance value of a first passage (F1) between the first ground portion (8A) and one of the high-voltage side cooling passages (HP2) that is closest to the first ground portion (8A) is higher than an electric resistance value of a second passage (F2) between the first ground portion (8A) and one of the low-voltage side cooling passages (LP2) that is closest to the first ground portion (8A), and
an electric resistance value of a third passage (F3) between the second ground portion (8B) and one of the high-voltage side cooling passages (HP2) that is closest to the second ground portion (8B) is higher than an electric resistance value of a fourth passage (F4) between the second ground portion (8B) and one of the low-voltage side cooling passages (LP2) that is closest to the second ground portion (8B).

2. The discharge cell of claim 1 for an ozone generation apparatus, wherein
the high-voltage electrode modules (62) of the discharge units (60) adjacent to each other face each other with the high-voltage side cooling passage (HP2) sandwiched therebetween, and
the low-voltage electrode modules (61) of the discharge units (60) adjacent to each other face each other with the low-voltage side cooling passage (LP2) sandwiched therebetween.

3. The discharge cell of claim 1 for an ozone generation apparatus, wherein
a passage length of the first passage (F 1) is longer than a passage length of the second passage (F2), and
a passage length of the third passage (F3) is longer than a passage length of the fourth passage (F4).

4. The discharge cell of claim 1 for an ozone generation apparatus, wherein
the heating medium passage (P) includes
a high-voltage side inflow main passage (91) extending from the outflow end of the inflow passage (33) to one of the high-voltage side cooling passages (HP2) that is closest to the outflow end of the inflow passage (33),
a low-voltage side inflow main passage (93) extending from the outflow end of the inflow passage (33) to one of the low-voltage side cooling passages (LP2) that is closest to the outflow end of the inflow passage (33),
a high-voltage side outflow main passage (92) extending from the inflow end of the outflow passage (34) to one of the high-voltage side cooling passages (HP2) that is closest to the inflow end of the outflow passage (34), and
a low-voltage side outflow main passage (94) extending from the inflow end of the outflow passage (34) to one of the low-voltage side cooling passages (LP2) that is closest to the inflow end of the outflow passage (34),
the first ground portion (8A) is provided at the outflow end of the inflow passage (33),
the second ground portion (8B) is provided at the inflow end of the outflow passage (34),
an electric resistance value of the high-voltage side inflow main passage (91) is higher than an electric resistance value of the low-voltage side inflow main passage (93), and
an electric resistance value of the high-voltage side outflow main passage (92) is higher than an electric resistance value of the low-voltage side outflow main passage (94).

5. The discharge cell of claim 4 for an ozone generation apparatus, wherein
a passage length of the high-voltage side inflow main passage (91) is longer than a passage length of the low-voltage side inflow main passage (93), and
a passage length of the high-voltage side outflow main passage (92) is longer than a passage length of the low-voltage side outflow main passage (94).

6. The discharge cell of claim 5 for an ozone generation apparatus, wherein
the electric resistance value of the high-voltage side inflow main passage (91) is equal to the electric resistance value of the high-voltage side outflow main passage (92).

7. The discharge cell of claim 6 for an ozone generation apparatus, wherein
the passage length of the high-voltage side inflow main passage (91) is equal to the passage length of the high-voltage side outflow main passage (92).

8. The discharge cell of claim 5 for an ozone generation apparatus, wherein
any one of or both of the high-voltage side inflow main passage (91) and the high-voltage side outflow main passage (92) include a bent portion (95, 96) having a bent passage.

9. An ozone generation apparatus, comprising:
the discharge cell (20) of any one of claims 1 to 8 for an ozone generation apparatus; and
a supply unit (4) configured to supply the inflow passage (33) with water of which a specific resistance value is 15 [Ω·m] or higher.

## Patentansprüche

1. Entladungszelle für eine Ozonerzeugungsvorrichtung, umfassend:
mehrere Entladungseinheiten (60), die ein Hochspannungselektrodenmodul (62) mit einer Hochspannungselektrode (62c) und ein Niederspannungselektrodenmodul (61) mit einer Niederspannungselektrode (61c) aufweisen, wobei von dem Hochspannungselektrodenmodul (62) oder dem Niederspannungselektrodenmodul (61) zumindest eines mit einem Dielektrikum (61a, 62a) versehen ist;
einen Wärmemediumkanal (P), durch den ein Wärmemedium fließt, das die Entladungseinheiten (60) kühlt; und
einen Erdungsabschnitt (8A, 8B), der mit dem Wärmemediumkanal (P) verbunden ist,
wobei
der Wärmemediumkanal (P) aufweist
einen Einströmungskanal (33), in den das Wärmemedium einströmt,
einen hochspannungsseitigen Kanal (HP) und einen niederspannungsseitigen Kanal (LP), die jeweils von einem Ausströmungsende des Einströmungskanals (33) abzweigen, und
einen Ausströmungskanal (34), mit dem jedes Ausströmungsende des hochspannungsseitigen Kanals (HP) und des niederspannungsseitigen Kanals (LP) verbunden ist,
der hochspannungsseitige Kanal (HP) mehrere parallel miteinander verbundene hochspannungsseitige Kühlkanäle (HP2) aufweist, sodass jeder hochspannungsseitige Kühlkanal an das Hochspannungselektrodenmodul (62) der mehreren Entladungseinheiten (60) angrenzt,
der niederspannungsseitige Kanal (LP) mehrere parallel miteinander verbundene niederspannungsseitige Kühlkanäle (LP2) aufweist, sodass jeder niederspannungsseitige Kühlkanal an das Niederspannungselektrodenmodul (61) der mehreren Entladungseinheiten (60) angrenzt,
der Erdungsabschnitt (8A, 8B) aufweist
einen ersten Erdungsabschnitt (8A), der zwischen einem der hochspannungsseitigen Kühlkanäle (HP2), der am nächsten zum Ausströmungsende des Einströmungskanals (33) liegt, und einem der niederspannungsseitigen Kühlkanäle (LP2), der am nächsten zum Ausströmungsende des Einströmungskanals (33) liegt, vorgesehen ist, und
einen zweiten Erdungsabschnitt (8B), der zwischen einem der hochspannungsseitigen Kühlkanäle (HP2), der am nächsten zum Einströmungsende des Ausströmungskanals (34) liegt, und einem der niederspannungsseitigen Kühlkanäle (LP2), der am nächsten zum Einströmungsende des Ausströmungskanals (34) liegt, vorgesehen ist,
ein elektrischer Widerstandswert eines ersten Kanals (F1) zwischen dem ersten Erdungsabschnitt (8A) und einem der hochspannungsseitigen Kühlkanäle (HP2), der am nächsten zum ersten Erdungsabschnitt (8A) liegt, höher ist als ein elektrischer Widerstandswert eines zweiten Kanals (F2) zwischen dem ersten Erdungsabschnitt (8A) und einem der niederspannungsseitigen Kühlkanäle (LP2), der am nächsten zum ersten Erdungsabschnitt (8A) liegt, und
ein elektrischer Widerstandswert eines dritten Kanals (F3) zwischen dem zweiten Erdungsabschnitt (8B) und einem der hochspannungsseitigen Kühlkanäle (HP2), der am nächsten zum zweiten Erdungsabschnitt (8B) liegt, höher ist als ein elektrischer Widerstandswert eines vierten Kanals (F4) zwischen dem zweiten Erdungsabschnitt (8B) und einem der niederspannungsseitigen Kühlkanäle (LP2), der am nächsten zum zweiten Erdungsabschnitt (8B) liegt.

2. Entladungszelle nach Anspruch 1 für eine Ozonerzeugungsvorrichtung, wobei
die Hochspannungselektrodenmodule (62) der aneinandergrenzenden Entladungseinheiten (60) einander zugewandt sind, wobei der hochspannungsseitige Kühlkanal (HP2) zwischen ihnen angeordnet ist; und
die Niederspannungselektrodenmodule (61) der aneinandergrenzenden Entladungseinheiten (60) einander zugewandt sind, wobei der niederspannungsseitige Kühlkanal (LP2) zwischen ihnen angeordnet ist.

3. Entladungszelle nach Anspruch 1 für eine Ozonerzeugungsvorrichtung, wobei
eine Kanallänge des ersten Kanals (F1) länger ist als eine Kanallänge des zweiten Kanals (F2) und
eine Kanallänge des dritten Kanals (F3) länger ist als eine Kanallänge des vierten Kanals (F4).

4. Entladungszelle nach Anspruch 1 für eine Ozonerzeugungsvorrichtung, wobei
der Wärmemediumkanal (P) aufweist
einen hochspannungsseitigen Einströmungshauptkanal (91), der sich vom Ausströmungsende des Einströmungskanals (33) zu einem der hochspannungsseitigen Kühlkanäle (HP2) erstreckt, der am nächsten zum Ausströmungsende des Einströmungskanals (33) liegt,
einen niederspannungsseitigen Einströmungshauptkanal (93), der sich vom Ausströmungsende des Einströmungskanals (33) zu einem der niederspannungsseitigen Kühlkanäle (LP2) erstreckt, der am nächsten zum Ausströmungsende des Einströmungskanals (33) liegt,
einen hochspannungsseitigen Ausströmungshauptkanal (92), der sich vom Einströmungsende des Ausströmungskanals (34) zu einem der hochspannungsseitigen Kühlkanäle (HP2) erstreckt, der am nächsten zum Einströmungsende des Ausströmungskanals (34) liegt, und
einen niederspannungsseitigen Ausströmungshauptkanal (94), der sich vom Einströmungsende des Ausströmungskanals (34) zu einem der niederspannungsseitigen Kühlkanäle (LP2) erstreckt, der am nächsten zum Einströmungsende des Ausströmungskanals (34) liegt,
der erste Erdungsabschnitt (8A) am Ausströmungsende des Einströmungskanals (33) vorgesehen ist,
der zweite Erdungsabschnitt (8B) am Einströmungsende des Ausströmungskanals (34) vorgesehen ist,
ein elektrischer Widerstandswert des hochspannungsseitigen Einströmungshauptkanals (91) höher ist als ein elektrischer Widerstandswert des niederspannungsseitigen Einströmungshauptkanals (93), und
ein elektrischer Widerstandswert des hochspannungsseitigen Ausströmungshauptkanals (92) höher ist als ein elektrischer Widerstandswert des niederspannungsseitigen Ausströmungshauptkanals (94).

5. Entladungszelle nach Anspruch 4 für eine Ozonerzeugungsvorrichtung, wobei
eine Kanallänge des hochspannungsseitigen Einströmungshauptkanals (91) länger ist als eine Kanallänge des niederspannungsseitigen Einströmungshauptkanals (93), und
eine Kanallänge des hochspannungsseitigen Ausströmungshauptkanals (92) länger ist als eine Kanallänge des niederspannungsseitigen Ausströmungshauptkanals (94).

6. Entladungszelle nach Anspruch 5 für eine Ozonerzeugungsvorrichtung, wobei
der elektrische Widerstandswert des hochspannungsseitigen Einströmungshauptkanals (91) gleich dem elektrischen Widerstandswert des hochspannungsseitigen Ausströmungshauptkanals (92) ist.

7. Entladungszelle nach Anspruch 6 für eine Ozonerzeugungsvorrichtung, wobei
die Kanallänge des hochspannungsseitigen Einströmungshauptkanals (91) gleich der Kanallänge des hochspannungsseitigen Ausströmungshauptkanals (92) ist.

8. Entladungszelle nach Anspruch 5 für eine Ozonerzeugungsvorrichtung, wobei
einer oder beide von dem hochspannungsseitigen Einströmungshauptkanal (91) und dem hochspannungsseitigen Ausströmungshauptkanal (92) einen gebogenen Abschnitt (95, 96) mit einem gebogenen Kanal aufweisen.

9. Ozonerzeugungsvorrichtung, umfassend:
die Entladungszelle (20) nach einem der Ansprüche 1 bis 8 für eine Ozonerzeugungsvorrichtung; und
eine Zuführungseinheit (4), die so ausgelegt ist, dass sie dem Einströmungskanal (33) Wasser zuführt, dessen spezifischer Widerstandswert 15 [Ω·m] oder höher ist.

## Revendications

1. Cellule de décharge pour un appareil pour la génération d'ozone, comprenant:
une pluralité d'unités de décharge (60) comportant un module d'électrode à haute tension (62) ayant une électrode à haute tension (62c) et un module d'électrode à basse tension (61) ayant une électrode à basse tension (61c), où l'un au moins du module d'électrode à haute tension (62) et du module d'électrode à basse tension (61) est fourni avec un diélectrique (61a, 62a);
un passage de milieu caloporteur (P) à travers lequel circule un milieu caloporteur qui refroidit les unités de décharge (60); et
une partie mise à la terre (8A, 8B) reliée au passage de milieu caloporteur (P),
dans laquelle
le passage de milieu caloporteur (P) comporte
un passage d'entrée (33) dans lequel circule le milieu caloporteur,
un passage du côté à haute tension (HP) et un passage du côté à basse tension (LP), chacun se ramifiant à partir d'une extrémité de sortie du passage d'entrée (33), et
un passage de sortie (34) auquel est reliée chaque extrémité de sortie du passage du côté à haute tension (HP) et du passage du côté à basse tension (LP),
le passage du côté à haute tension (HP) comporte une pluralité de passages de refroidissement du côté à haute tension (HP2) reliés en parallèle les uns aux autres de manière à être chacun adjacent au module d'électrode à haute tension (62) de la pluralité d'unités de décharge (60),
le passage du côté à basse tension (LP) comporte une pluralité de passages de refroidissement du côté à basse tension (LP2) reliés en parallèle les uns aux autres de manière à être chacun adjacent au module d'électrode à basse tension (61) de la pluralité d'unités de décharge (60),
la partie mise à la terre (8A, 8B) comporte
une première partie mise à la terre (8A) fournie entre l'un des passages de refroidissement du côté à haute tension (HP2) qui est le plus proche de l'extrémité de sortie du passage d'entrée (33), et l'un des passages de refroidissement du côté à basse tension (LP2) qui est le plus proche de l'extrémité de sortie du passage d'entrée (33), et
une deuxième partie mise à la terre (8B) fournie entre l'un des passages de refroidissement du côté à haute tension (HP2) qui est le plus proche d'une extrémité d'entrée du passage de sortie (34), et l'un des passages de refroidissement du côté à basse tension (LP2) qui est le plus proche de l'extrémité d'entrée du passage de sortie (34),
une valeur de résistance électrique d'un premier passage (F1) entre la première partie mise à la terre (8A) et l'un des passages de refroidissement du côté à haute tension (HP2) qui est le plus proche de la première partie mise à la terre (8A) est supérieure à une valeur de résistance électrique d'un deuxième passage (F2) entre la première partie mise à la terre (8A) et l'un des passages de refroidissement du côté à basse tension (LP2) qui est le plus proche de la première partie mise à la terre (8A), et
une valeur de résistance électrique d'un troisième passage (F3) entre la deuxième partie mise à la terre (8B) et l'un des passages de refroidissement du côté à haute tension (HP2) qui est le plus proche de la deuxième partie mise à la terre (8B) est supérieure à une valeur de résistance électrique d'un quatrième passage (F4) entre la deuxième partie mise à la terre (8B) et l'un des passages de refroidissement du côté à basse tension (LP2) qui est le plus proche de la deuxième partie mise à la terre (8B).

2. Cellule de décharge selon la revendication 1 pour un appareil pour la génération d'ozone, dans laquelle
les modules d'électrode à haute tension (62) des unités de décharge (60) adjacents l'un à l'autre se font face avec le passage de refroidissement du côté à haute tension (HP2) pris en sandwich entre eux, et
les modules d'électrode à basse tension (61) des unités de décharge (60) adjacents l'un à l'autre se font face avec le passage de refroidissement du côté à basse tension (LP2) pris en sandwich entre eux.

3. Cellule de décharge selon la revendication 1 pour un appareil pour la génération d'ozone, dans laquelle
une longueur du premier passage (F1) est supérieure à une longueur du deuxième passage (F2), et
une longueur du troisième passage (F3) est supérieure à une longueur du quatrième passage (F4).

4. Cellule de décharge selon la revendication 1 pour un appareil pour la génération d'ozone, dans laquelle
le passage de milieu caloporteur (P) comporte
un passage principal d'entrée du côté à haute tension (91) s'étendant de l'extrémité de sortie du passage d'entrée (33) à l'un des passages de refroidissement du côté à haute tension (HP2) qui est le plus proche de l'extrémité de sortie du passage d'entrée (33),
un passage principal d'entrée du côté à basse tension (93) s'étendant de l'extrémité de sortie du passage d'entrée (33) à l'un des passages de refroidissement du côté à basse tension (LP2) qui est le plus proche de l'extrémité de sortie du passage d'entrée (33),
un passage principal de sortie du côté à haute tension (92) s'étendant de l'extrémité d'entrée du passage de sortie (34) à l'un des passages de refroidissement du côté à haute tension (HP2) qui est le plus proche de l'extrémité d'entrée du passage de sortie (34), et
un passage principal de sortie du côté à basse tension (94) s'étendant de l'extrémité d'entrée du passage de sortie (34) à l'un des passages de refroidissement du côté à basse tension (LP2) qui est le plus proche de l'extrémité d'entrée du passage de sortie (34),
la première partie mise à la terre (8A) est fournie à l'extrémité de sortie du passage d'entrée (33),
la deuxième partie mise à la terre (8B) est fournie à l'extrémité d'entrée du passage de sortie (34),
une valeur de résistance électrique du passage principal d'entrée du côté à haute tension (91) est supérieure à une valeur de résistance électrique du passage principal d'entrée du côté à basse tension (93), et
une valeur de résistance électrique du passage principal de sortie du côté à haute tension (92) est supérieure à une valeur de résistance électrique du passage principal de sortie du côté à basse tension (94).

5. Cellule de décharge selon la revendication 4 pour un appareil pour la génération d'ozone, dans laquelle
une longueur du passage principal d'entrée du côté à haute tension (91) est supérieure à une longueur du passage principal d'entrée du côté à basse tension (93), et
une longueur du passage principal de sortie du côté à haute tension (92) est supérieure à une longueur du passage principal de sortie du côté à basse tension (94).

6. Cellule de décharge selon la revendication 5 pour un appareil pour la génération d'ozone, dans laquelle
la valeur de résistance électrique du passage principal d'entrée du côté à haute tension (91) est égale à la valeur de résistance électrique du passage principal de sortie du côté à haute tension (92).

7. Cellule de décharge selon la revendication 6 pour un appareil pour la génération d'ozone, dans laquelle
la longueur du passage principal d'entrée du côté à haute tension (91) est égale à la longueur du passage principal de sortie du côté à haute tension (92).

8. Cellule de décharge selon la revendication 5 pour un appareil pour la génération d'ozone, dans laquelle
l'un quelconque ou les deux du passage principal d'entrée du côté à haute tension (91) et du passage principal de sortie du côté à haute tension (92) comportent une partie courbée (95, 96) ayant un passage courbé.

9. Appareil pour la génération d'ozone, comprenant:
la cellule de décharge (20) selon l'une quelconque des revendications 1 à 8 pour un appareil pour la génération d'ozone; et
une unité d'alimentation (4) configurée pour alimenter le passage d'entrée (33) en eau dont une valeur de résistance spécifique est de 15 [Ω·m] ou plus.
